# EUROPEAN PATENT SPECIFICATION

(11) **EP 3 246 744 B1**
(45) Date of publication and mention of the grant of the patent: **18.09.2019**
(21) Application number: 17170914.0
(22) Date of filing: 12.05.2017
(51) Int. Cl.: G02B 27/00, G02B 26/10, H04N 1/053

(54) **OPTICAL SCANNING DEVICE, OPTICAL SCANNING METHOD, AND SYNCHRONIZATION SIGNAL ACQUISITION METHOD**
OPTISCHE ABTASTVORRICHTUNG, OPTISCHES ABTASTVERFAHREN UND SYNCHRONISIERUNGSSIGNALAKQUISITIONSVERFAHREN
DISPOSITIF DE BALAYAGE OPTIQUE, PROCÉDÉ DE BALAYAGE OPTIQUE ET PROCÉDÉ D'ACQUISITION DE SIGNAL DE SYNCHRONISATION

(30) Priority: 20.05.2016 JP 2016101020
(43) Date of publication of application: 22.11.2017
(73) Proprietor: Ricoh Company, Ltd., Tokyo 143-8555 (JP)
(72) Inventor: SHITOMI, Takayuki, Tokyo 143-8555 (JP)
(74) Representative: J A Kemp

(56) References cited:
- EP-A2- 1 498 840
- JP-A- H04 232 911
- JP-A- 2007 178 712
- US-A- 5 444 239
- US-A1- 2012 188 323

## Description

### Technical Field

Embodiments of the present disclosure relate to an optical scanning device, an optical scanning method, and a synchronization signal acquisition method.

### Related Art

In recent years, apparatuses that scan a scanning range with light are being developed.

For example, the optical scanning device for forming images or displaying images includes a sensor, such as a synchronous detection IC, to detect a passing timing of a laser beam as a synchronization signal to synchronize scanning between frames or lines.

In the synchronous detection system using such a synchronous detection IC, the output timing of synchronization signals of the synchronous detection IC changes with variations in laser power level of scanning light, resulting in image failure.

To reduce the amount of changes in output timing of synchronous detection signals with variations in laser power level, a technology is known that determines the difference in laser power level between two light-receiving elements disposed within the synchronous detection IC, i.e., the system that utilizes two-element synchronous detection IC.

In the device described in JP-2007-144800-A1, for example, photodetectors of a plurality of light detectors are arrayed along a main-scanning direction over a scanning range to detect detection signals when light is emitted from a light source upon scanning. A comparator of the device compares the detection signals and outputs a comparative signal as a synchronization signal.

More specifically, in the configuration described in JP-2007-144800-A1, the typical two-element synchronous detection IC is combined with a comparator to determine a two-way scanning direction in a scanning optical system, to increase the accuracy of outputting synchronization signals.

However, the technology described in JP-2007-144800-A1 has problems in preventing or reducing variation in output timing of synchronization signals with laser power level.

US 2012/0188323 A1 discloses a light beam scanning device that performs light amount control when scanning a photosensitive member using light beams.

### SUMMARY

The invention is described in the claims.

In an aspect of this disclosure, there is provided an improved optical scanning device (10) including a light-source device (11), an optical scanning system (11, 15), a first light detector (D1), a second light detector (D2), a comparator (COMP), and a control system (6000). The light-source deice (11) emits light to scan a scanning range. The optical scanning system (11, 15) is disposed on an optical path of the light emitted from the light-source device (11). The first light detector (D1) includes a first light-receiving element (PD1). The second light detector (D2) includes a second light-receiving element (PD2). The first light-receiving element (PD1) and the second light-receiving element (PD2) are disposed side by side along a main scanning direction in the scanning range. The first light-receiving element (PD1) and the second light-receiving element (PD2) respectively output a first detection signal and a second detection signal. The comparator (COMP) compares the first detection signal of the first light detector (D1) and the second detection signal of the second light detector (D2) and outputs a comparative signal. The control system (6000) sets a target value (Pt) of a light-emission power (P) of the light-source device (11), based on a level Ps at which an output time (T) has a minimum value. The light-emission power (P) has the target value (Pt) to be used for scanning the first light-receiving element (PD1) and the second light-receiving element (PD2). The output time (T) is a time period from a reference time point to a time at which the comparator (COMP) outputs the comparative signal.

In another aspect of this disclosure, there is provided an improved optical scanning method that includes turning (S11) on the light-source device (11) of the optical scanning device (10) as described above to emit light at the light-emission power (P) having the target value (Pt) to scan the first light-receiving element (PD1) and the second light-receiving element (PD2) of the first light detector (D1) and the second light detector (D2), and controlling (S14) the light-source device (11) to scan an effective scanning area (30a) and an area (30b) surrounding the effective scanning area (30a), based on the comparative signal output from the comparator (COMP).

In still another aspect of this disclosure, there is provided an improved synchronization signal acquisition method for acquiring, as a synchronization signal, a comparative signal of a comparator (COMP) having received detection signals of a first light detector (D1) and a second light detector (D2) scanned by light emitted from a light-source device (11) of an optical scanning device (10). The synchronization signal acquiring method includes determining (S1) a function (P-T) of variations in an output time (T) with a light-emission power (P) of a light-source device (11). The output time (T) is a time period from a reference time point to a time at which a comparator outputs a comparative signal. The synchronization signal acquisition method further includes setting (S2) a target value (Pt) of the light-emission power (P) of a light-source device (11) to scan a first light-receiving element (PD1) and a second light-receiving element (PD2) of a first light detector (D1) and a second light detector (D2), based on a predetermined power (Ps) at which the output time T has a minimum value. The light-emission power (P) has the target value (Pt) to be used for scanning the first light-receiving element (PD1) and the second light-receiving element (PD2).

According to the embodiments of the present disclosure, a simple configuration allows for an accurate estimation of the wavelength of light emitted from the light sources.

The embodiments of the present disclosure can reduce the differences in output timing of the comparative signals.

### BRIEF DESCRIPTION OF THE DRAWINGS

The aforementioned and other aspects, features, and advantages of the present disclosure will be better understood by reference to the following detailed description when considered in connection with the accompanying drawings, wherein:
FIG. 1 is an illustration of a schematic configuration of a heads-up display (HUD) according to an embodiment of the present disclosure;
FIG. 2 is a block diagram of a hardware configuration of a control system of the HUD illustrated in FIG. 1;
FIG. 3 is a functional block diagram of the HUD according to an embodiment of the present disclosure;
FIG. 4 is an illustration of a light-source unit of the HUD according to an embodiment of the present disclosure;
FIG. 5 is an illustration of a light deflector of the HUD according to an embodiment of the present disclosure;
FIG. 6 is an illustration of the corresponding relation between a mirror of the light deflector and the scanning range;
FIG. 7 is an illustration of an example of a trajectory of a scanning line when two-dimensional scanning is performed, according to an embodiment of the present disclosure;
FIGs. 8A and 8B are an illustration for describing a difference in operation with changes in a laser beam diameter and a lens diameter in a microlens array;
FIG. 9 is an illustration of a schematic configuration of a synchronization detection system;
FIG. 10 is a circuit diagram of the synchronous detection system;
FIG. 11A is a timing chart of received-light signals and a synchronization signal with relatively reduced power of light emission of a light source;
FIG. 11B is a timing chart of the received-light signals and the synchronization signal with relatively increased power of light emission of the light source;
FIGs. 12A through 12C are timing charts of the received-light signals and the synchronization signal of light emitted from a light-source device with small, medium, and large light-emission power, respectively;
FIG. 13 is a graph of a P-T curve, a P-Tc curve, and a P-Td curve;
FIG. 14 is an illustration for explaining a function of the relation of a fluctuation range of an output time relative to a variation range around a target value of the light-emission power of the light-source device;
FIG. 15 is a flowchart of a light-emission-power target setting process;
FIG. 16 is a flowchart of an image display process;
FIG. 17 is an illustration of a laser printer according to an embodiment of the present disclosure; and
FIG. 18 is an illustration of an optical scanner of the laser printer of FIG. 17.

The accompanying drawings are intended to depict embodiments of the present disclosure and should not be interpreted to limit the scope thereof. The accompanying drawings are not to be considered as drawn to scale unless explicitly noted.

### DETAILED DESCRIPTION

In describing embodiments illustrated in the drawings, specific terminology is employed for the sake of clarity. However, the disclosure of this patent specification is not intended to be limited to the specific terminology so selected and it is to be understood that each specific element includes all technical equivalents that have the same function, operate in a similar manner, and achieve similar results.

Although the embodiments are described with technical limitations with reference to the attached drawings, such description is not intended to limit the scope of the disclosure and all of the components or elements described in the embodiments of this disclosure are not necessarily indispensable.

A description is given of a heads-up display (HUD) 100 as an image display apparatus according to an embodiment of the present disclosure, referring to the Figures.

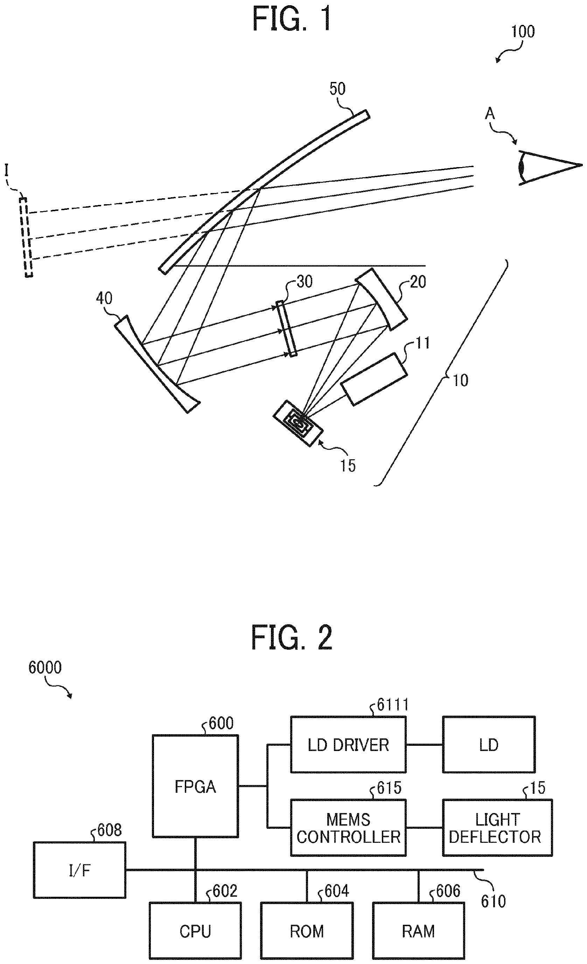

FIG. 1 is an illustration of a schematic configuration of the HUD 100 according to the present embodiment.

### <Schematic Configuration of HUD>

As a HUD projection method, there is a "panel system" and a "laser scanning system". In the panel system, an imaging device, such as a liquid crystal display (LCD), a digital micro-mirror device (DMD) panel (digital mirror device panel), or a vacuum fluorescent display (VFD) is used to form an intermediate image. In the laser scanning method, a two-dimensional scanning device scans an object with a laser beam emitted from a laser beam source to form an intermediate image. In particular, in the latter laser scan type, unlike the panel type where the image is formed by partial light blocking over the entire screen emission, since emission can be controlled on a pixel-by-pixel basis, in general, a high-contrast image can be formed.

In view of the above, the HUD 100 according to the present embodiment adopts the laser scanning system, although of course the above-described panel system can also be used.

The HUD 100 is mounted, for example, on a mobile object such as a vehicle, an aircraft, or a ship, and makes navigation information used for operating the mobile object (for example, speed of the mobile object, direction of travel of the mobile object, distance to a destination; name of current place; the presence and position of an object ahead of the mobile object; signs, such as speed limit; and traffic congestion information) visible through a front window 50 (see FIG. 1) of the mobile object. In such a case, the front window 50 also serves as a transmission and reflection member that transmits a portion of the incident light and reflects at least some of the remaining incident light. In the following description, cases in which the HUD 100 is mounted on a vehicle with the front window 50 are described.

As illustrated in FIG. 1, the HUD 100 includes an optical scanning device 10, a screen 30, and a concave mirror 40. The optical scanning device 10 includes a light-source unit 11, a light deflector 15, and a scanning mirror 20. The HUD 100 emits light (image light) for forming an image onto the front window 50, to allow a viewer A (in the present embodiment, a driver of a vehicle) to visually identify a virtual image I at eye-level. In other words, the viewer A can visually identify, through the front window 50, an image (intermediate image) as the virtual image formed (drawn) on the screen 30 by the optical scanning device 10.

The HUD 100 is disposed under a dashboard of a vehicle as an example. The distance from the location of the eye of the viewer A to the front window 50 ranges from several tens of centimeters (cm) to approximately 1 meter (m).

In the present embodiment, the concave mirror 40 is designed by using a commercially available optical-designed simulation software such that the concave mirror 40 obtains a predetermined level of light-gathering power to achieve a desired image-forming position of the virtual image I.

In the HUD 100, the light-gathering power of the concave mirror 40 is designed such that the virtual image I is displayed at a position (depth) 1 m or more and 10 m or less (preferably 6 m or less) away from the eye of the viewer A.

The front windshield 50 typically has a slightly curved surface, and is not a flat plane. The curved surfaces of the concave mirror 40 and the front windshield 50 determine the image-forming position of the virtual image I.

The light-source unit 11 combines laser beams of three colors, R (red), G (green), and B (blue), modulated according to image data. The combined light, in which the three-color laser beams are combined, is guided to the reflection plane of the light deflector 15. The light deflector 15 as a deflector is a micro-electromechanical system (MEMS) scanner produced by a semiconductor manufacturing process. The light deflector 15 includes a single micro-mirror that is independently rotatable about two perpendicular axes. The light-source unit 11 and the light deflector 15 are described later in detail.

The light (the above-described combined light) according to image data output from the light-source unit 11 is deflected by the light deflector 15 and reflected by the scanning mirror 20. Thus, the light goes to the screen 30. Then, the screen 30 is optically scanned to form an intermediate image thereon. The light deflector 15 and the scanning mirror 20 constitute an optical scanning system. Note that, preferably, the concave mirror 40 is designed and disposed to correct the optical deformation in which the horizontal line of the intermediate image is distorted convexly upward or downward due to the shape of the front window 50.

The light having passed through the screen 30 is reflected by the concave mirror 40 toward the front window 50. Some of light rays that enter the front window 50 permeate the front window 50, and at least some of the remaining light rays are reflected by the front window 50 toward the viewpoint position of a viewer A. As a result, the viewer A can visually identify, through the front window 50, a virtual image I that is an enlarged intermediate image. That is, the viewer A can see an enlarged virtual image I through the front window 50.

In some embodiments, a combiner as the transmission and reflection member may be disposed closer to the viewpoint position of the viewer A than the front window 50 to receive light from the concave mirror 40, which allows displaying a virtual image in the same manner as in the configuration with only the front window 50 disposed.

### <Hardware Configuration of Control System of the HUD>

FIG. 2 is a block diagram of a hardware configuration of a control system 6000 of the HUD 100. As illustrated in FIG. 2, the control system 6000 of the HUD 100 includes a field programmable gate array (FPGA) 600, a central processing unit (CPU) 602, a read-only memory (ROM) 604, a random access memory (RAM) 606, an interface (IF) 608, a bus line 610, a laser diode (LD) driver 6111, and a micro-electromechanical system (MEMS) controller 615.

The FPGA 600 causes the LD driver 6111 to drive an LD described below, and causes the MEMS controller 615 to control the light deflector 15 according to image data. The CPU 602 controls each operation of the HUD 100. The ROM 604 stores an image processing program that is executed by the CPU 602 to control operation of the HUD 100. The RAM 606 is used as a working area in which the CPU 602 executes the program. The IF 608 is an interface to communicate with an external controller such as a controller area network (CAN) of a vehicle.

### <Functional Blocks of the HUD>

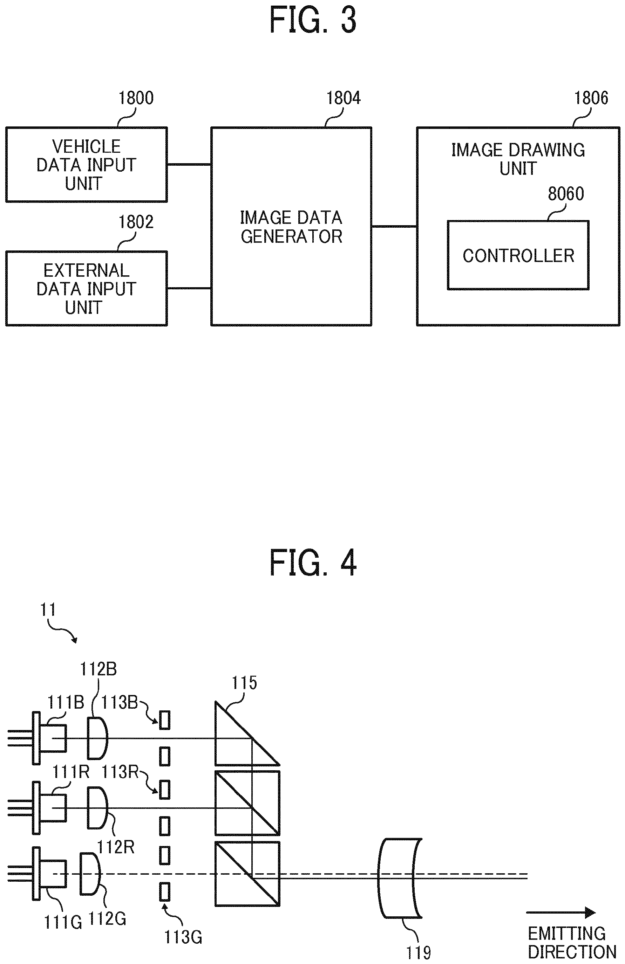

FIG. 3 is a block diagram of the HUD 100. As illustrated in FIG. 3, the HUD 100 includes a vehicle data input unit 1800, an external data input unit 1802, an image generator 1804, and an image drawing unit 1806. The vehicle data input unit 1800 receives vehicle-related data, such as the speed and mileage of the vehicle, the distance to a target, and the exterior brightness, from the CAN. The external data input unit 1802 receives external data, such as navigation information from the global positioning system (GPS), from the external network. The image generator 1804 generates image data of an image to be drawn according to the data input from the vehicle data input unit 1800 and the external data input unit 1802, and sends the generated image data to a field programmable gate array (FPGA) 600. The imaging unit 1806 includes a controller 8060 to send a control signal to control the FPGA 600 to start or end drawing an image.

### <Configuration of Light-Source Device>

FIG. 4 is an illustration of a configuration of the light-source device 11. As illustrated in FIG. 4, the light-source device 11 includes a plurality of light-emitting elements 111R, 111B, and 111G each having a single or a plurality of (for example, three light-emitting points in the present embodiment) light-emitting points. Each of the light-emitting elements 111R, 111B, and 111G is a laser diode (LD). The light-emitting elements 111R, 111B, and 111G emit light-beam bundles having different wavelengths λR, λG, and λB, respectively. For example, the wavelength λR is 640 nanometer (nm), the wavelength λG is 530 nm, and λB is 445 nm. The light beams having the wavelengths λR, λG, and λB, which are emitted from the light-emitting elements 111R, 111G, and 111B, respectively, pass through coupling lenses 112R, 112G, and 112B corresponding to the respective laser beams, to be coupled to a subsequent optical system. The coupled laser beams are shaped by aperture members 113R, 113G, and 113B corresponding to the respective laser beams. Each of the aperture members 113R, 113G, and 113B may have any kind of shape, such as a circle, an ellipse, a rectangle, or a square, according to the divergence angle of the laser beam. The laser beams shaped by the corresponding aperture members 113R, 113G, and 113B pass through a combining element 115 to be combined into one laser beam that travels along one optical path. The combining element 115 is a plate or prismatic dichroic mirror to reflect or transmit each of the laser beams therethrough according to the wavelength of each of the laser beams and thus combine the laser beams into one laser beam that travels along one optical path. The combined laser beam passes through a lens 119 to be guided to the reflection plane of the light deflector 15. The lens 119 is a meniscus lens having a concave surface facing the light deflector 15.

### <Configuration of Light Deflector>

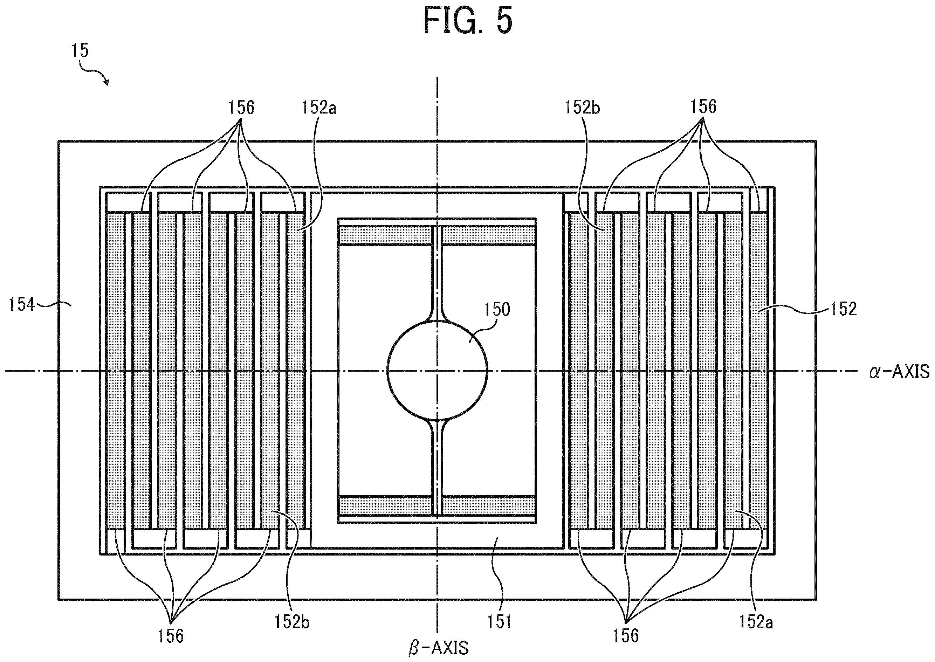

FIG. 5 is an illustration of a configuration of the light deflector 15. As illustrated in FIG. 5, the light deflector 15, which is a two-axis MEMS scanner produced by a semiconductor manufacturing process, includes a mirror 150 having a reflection plane and a plurality of bars arranged in an α-axis direction. The light deflector 15 further includes a pair of serpentine units 152 in which two adjacent beams are connected to form a meander geometry. The two adjacent beams of each serpentine unit 152 are a first beam 152a and a second beam 152b. The first beam 152a and the second beam 152b are supported by a frame member 154. Each of the first beam 152a and the second beam 152b is provided with a plurality of piezoelectric materials 156 (for example, PZT (lead zirconate titanate)). Different voltages are applied to the piezoelectric member of the two adjacent beams in each serpentine unit 15. Accordingly, the two adjacent beams 152a and 152b bend in different directions. As elastic energy is accumulated in the bent portion, the mirror 150 rotates about the α axis (in the vertical direction) with a wide angle. Due to such a configuration, optical scanning where the vertical axis is the center of the α axis can be performed in the vertical direction with lower voltage. On the other hand, around the β axis in the horizontal direction, the optical scanning with resonance is performed using, for example, a torsion bar that is connected to the mirror 150.

Although the HUD 100 momentarily projects a dot image corresponding to a laser beam diameter, an afterimage within one frame image sufficiently remains in a human eye because of very-high-speed scanning. Such an afterimage phenomenon allows a driver to perceive the afterimage as an image projected onto an "image display area". In actuality, the image having been displayed on the screen 30 is reflected by the concave mirror 40 and the front window 50 and the image is perceived as a virtual image by a driver in the image display area. In such a mechanism, the light emission of the LD may be stopped when no image is displayed. In other words, the brightness can be substantially set to 0 for any places other than the place in which a virtual image is displayed in the image display area.

More specifically, the image-forming position of a virtual image formed by the HUD 100 is any position within the image display area in which the virtual image can be formed. Such an image display area is determined according to the design specifications for the HUD.

As described above, the laser scanning system is adopted in the present embodiment. This allows switching off the LD or reducing the amount of light of the LD for portions not to be displayed (hidden).

In the panel system, by contrast, in which an intermediate image is expressed by the imaging device, such as a liquid crystal display (LCD) and a digital micro-mirror device (DMD), completely hiding the images is difficult even in a black display mode due to the properties of the LCD and the DMD in which the entire panel is illuminated. This causes misadjusted black level. However, the laser scanning system can prevent such a misadjusted black level (black floating).

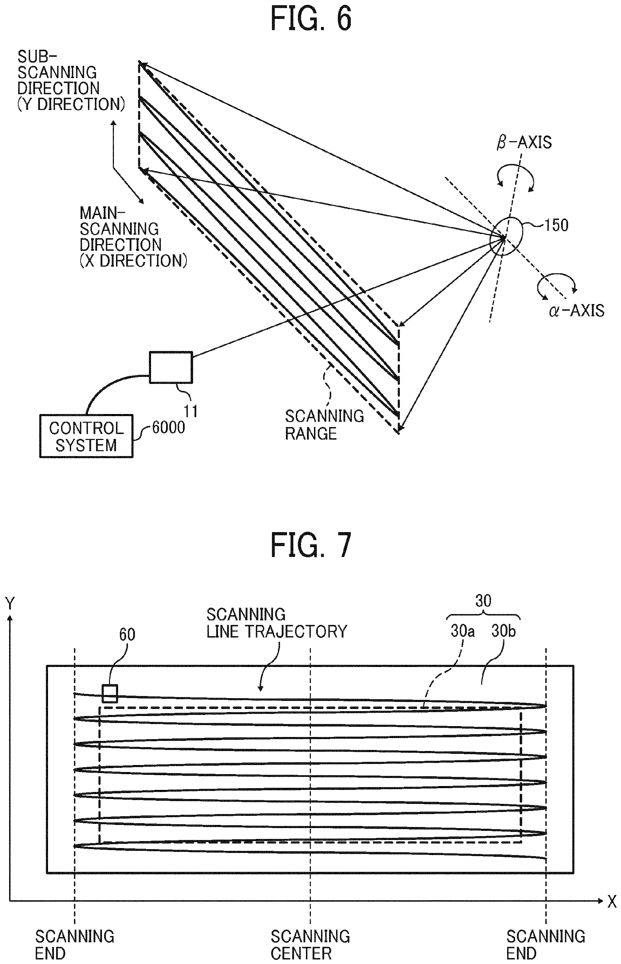

Note that the FPGA 600 controls the light-emission intensity, timing of light emission, and received-light waveform of each of the light-emitting elements 111R, 111B, and 111G in the light-source device 11. The LD driver 6111 drives each of the light-emitting elements 111R, 111B, and 111G to emit light. As illustrated in FIG. 6, the light beam, which has been emitted from each of the light-emitting elements 111R, 111B, and 111G and combined into travel along one optical path, is two-dimensionally deflected by the light deflector 15 around the α axis and the β axis. The deflected light beam is reflected by the scanning mirror 20 (see FIG. 1), and the reflected light beam as scanning light scans the screen 30. That is, the scanning light two-dimensionally scans the screen 30.

The scanning light scans (two-way scans) a scanning range of the screen 30 in a vibrating manner along the main scanning direction at a high frequency of approximately from 20,000 to 40,000 hertz (Hz), and one-way scans the scanning range in the sub-scanning direction at a low frequency of approximately a few tens of Hz. That is, the optical scanning system performs raster scan. In the process of the raster scan, controlling light emission of each light-emitting element (111B, 111R, and 111G) according to a scanning position (the position of the scanning light) allows writing an image and displaying a virtual image for each pixel.

The length of time to write an image in one frame, that is, the length of time for the scanning light to scan one frame (one cycle of two-dimensional scanning) is a few tens of millisecond (msec) that is determined by the above-described frequency of a few tens of Hz for the sub-scanning direction (sub-scanning frequency). For example, with a frequency of 20,000 Hz for the main-scanning direction (main-scanning frequency) and a sub-scanning frequency of 50 Hz, scanning for one frame takes 20 msec.

As illustrated in FIG. 7, the screen 30 includes an image area 30a (effective scanning area) in which images are written (illuminated with modulated light according to image data). The screen 30 further includes a marginal area 30b that surrounds the image area 30a.

In the present embodiment, the entire area to be scanned by the light deflector 15 is referred to as a "scanning range". In the present embodiment, the scanning range is the combination of the image area 30a and a part of the marginal area 30b (portion around the periphery of the image area 30a). In FIG. 7, the trajectory of the scanning line in the scanning range is indicated by a zigzag line. The number of scanning lines shown in FIG. 7 is less than the actual number for the sake of simplification.

The image area 30a of the screen 30 includes a transmissive element, such as a microlens array, that is capable of diffusing light. In the present embodiment, the image area 30a is rectangular and planar as illustrated in FIG. 7. However, no limitation is intended thereby. In some embodiments, the image area 30a may be polygon or curved. Alternatively, in some embodiments, the screen 30 may be a flat plate or curved plate that is incapable of diffusing light. Further, in some embodiments, the image area 30a may be a reflective element, such as a micromirror array, that is capable of diffusing light according to the design of the HUD 100.

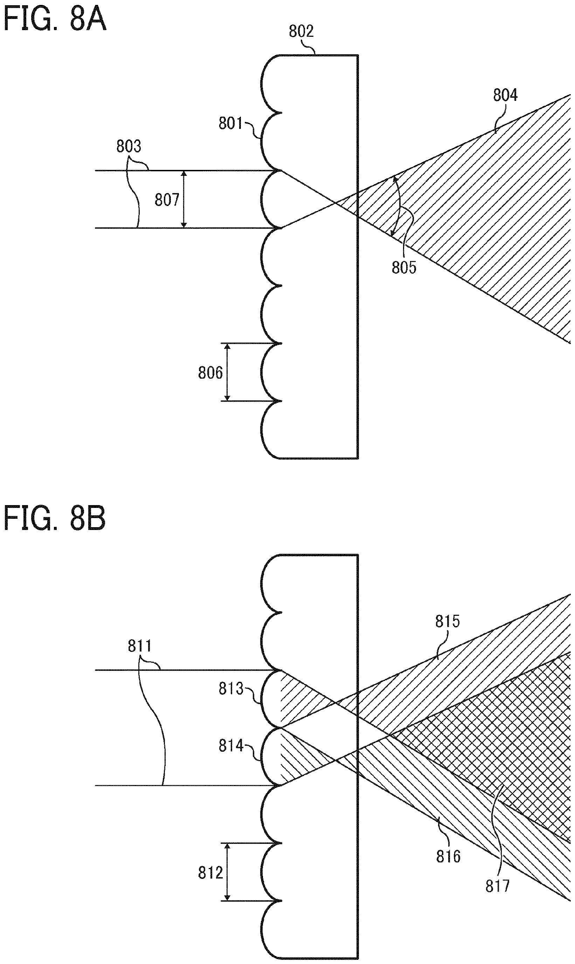

The following describes diffusion and coherent noise that occurs in a microlens array used in the image area 30a of the screen 30 referring to FIGs. 8A and 8B.

FIG. 8A illustrates a microlens array 802. The microlens array 802 has a micro-convex lens structure where micro-convex lenses 801 are arranged. A laser beam diameter 807 of a pixel displaying beam 803 is smaller than a size 806 of each micro-convex lens 801. In other words, the size 806 of each micro-convex lens 801 is larger than the laser beam diameter 807. Note that, the pixel displaying beam 803 according to the present embodiment is a laser beam and has a light intensity distribution of a Gaussian distribution around the center of the laser beam. Accordingly, the laser beam diameter 807 is a distance in the radial direction of a laser beam where the light intensity in the light intensity distribution decreases to "1 / e2".

In FIG. 8A, the laser beam diameter 807 is drawn to have a size equal to the size 806 of each micro-convex lens 801. However, in some embodiments, the laser beam diameter 807 may not be equal to the size 806 of the micro-convex lens 801. The light-beam bundle diameter 807 is satisfactory as long as its size does not exceed the size 806 of each micro-convex lens 801.

In FIG. 8A, the entire pixel displaying beam 803 is incident on one micro-convex lens 801 and is converted to a diffused laser beam 804 having a divergent angle 805. Note that the "divergence angle" may be referred to as a "diffusion angle" in some cases.

In FIG. 8A, one laser beam is diffused (the diffused laser beam 804) without any interfering laser beam, and thus no coherent noise occurs. Note that the size of the divergence angle 805 may be set by adjusting the shape of the micro-convex lens 801 as appropriate.

In FIG. 8B, the laser beam diameter of the pixel displaying beam 811 is two times wider than the array pitch 812 of the micro-convex lenses, and the pixel displaying beam 811 enters both two micro-convex lenses 813 and 814. In this case, the pixel displaying beam 811 passes through the two micro-convex lenses 813 and 814, thereby separating into two laser beams 815 and 816 each of which diverges. The two laser beams 815 and 816 overlap each other in an area 817 to interfere with each other therein, so that coherent noise occurs.

Referring again to FIG. 7, a synchronous detection system 60 is disposed outside (the part of the marginal area 30b) the image area 30a in the scanning range. In the present embodiment, the synchronous detection 60 is disposed on the +Y side of the corner of -X side and +Y side of the image area 30a. Hereinafter, the main-scanning direction of the screen 30 is referred to as the X direction, and the sub-scanning direction of the screen 30 is referred to as the Y direction.

The synchronous detection system 60 detects the operation of the light deflector 15 and outputs, to the FPGA 600, a synchronization signal to determine the timing of starting scanning and the timing of terminating scanning.

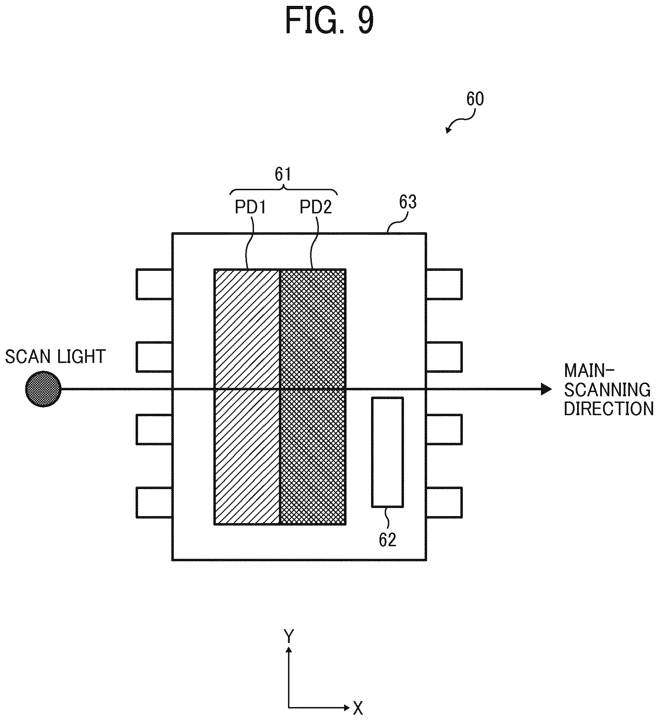

More specifically, as illustrated in FIG. 9, the synchronous detection system 60 includes a light-receiving element pair 61 (a first light-receiving element PD1 and a second light-receiving element PD2 adjacent to the first light-receiving element PD1 along the main-scanning direction (the X direction)). The synchronous detection system 60 further includes a processing circuit 62 to process current output from each of the first light-receiving element PD1 and the second light-receiving element PD2. In the present embodiment, the second light-receiving element PD2 is disposed on the +X side of the first light-receiving element PD1. In the present embodiment, the light-receiving element pair 61 and the processing circuit 62 are mounted on the same substrate 63. The first light-receiving element PD1 and the second light-receiving element PD2 each is a photodiode.

The scanning line traverses the light-receiving element pair 61 from -X side to the +X side (see FIG. 7). More specifically, the scanning light scans the first light-receiving element PD1 and the second light-receiving element PD2 in this recited order.

Each of the first light-receiving element PD1 and the second light-receiving element PD2 that have been illuminated with the scanning light outputs current according to the intensity of the scanning light, to the processing circuit 62.

The processing circuit 62 having received the electric current from each of the first light-receiving element PD1 and the second light-receiving element PD2 processes the current and outputs a synchronization signal to the FPGA 600.

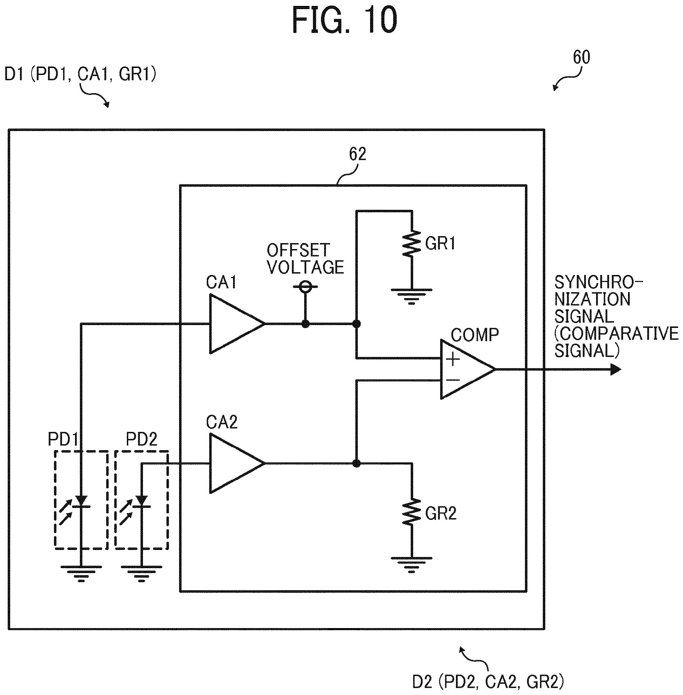

FIG. 10 is a circuit diagram of the synchronous detection system 60.

As illustrated in FIG. 10, the process circuit 62 includes a first current amplifier CA1, a first gain resistor GR1, a second current amplifier CA2, a second gain resistor GR2, and a comparator COMP. The first current amplifier CA1 has the input terminal connected to the anode, and has the output terminal connected to one end of the first gain resistor GR1. The second current amplifier CA2 has the input terminal connected to the anode, and has the output terminal connected to one end of the second gain resistor GR2. The comparator COMP has the positive input terminal connected to the end of the gain resistor RG1 and has the negative input terminal connected to the end of the gain resistor RG2.

The cathode of each of the first light-receiving element PD1 and the second light-receiving element PD2 is electrically grounded. The other end of each of the first gain resistor GR1 and the second gain resistor GR2 is electrically grounded.

The first light-emitting element PD1 and the second light-emitting element PD2 that have been sequentially scanned with the scanning light output electric currents to the first current amplifier CA1 and the second current amplifier CA2, respectively. In this case, the electric currents output from the first light-emitting element PD1 and the second light-emitting element PD2 are weak and vulnerable to noise. Accordingly, the above-described current amplifiers CA1 and CA2 are used to amplify the electric currents to a certain current value, and output the amplified electric currents to the corresponding gain resistors GR1 and GR2.

The first gain resistors GR1 and the second gain resistor GR2, which have received the electric currents from the first current amplifier CA1 and the second current amplifier CA2, convert the electric currents into voltage values, respectively. The first gain resistors GR1 and the second gain resistor GR2 then output the converted voltage values to the comparator COMP, and the comparator COMP outputs a comparative signal as a synchronization signal to the FPGA 600.

An offset voltage is applied to the first current amplifier CA1 has the output terminal at all times. In the initial state in which the first light-receiving element PD1 receives no light, thus differentiating the voltage input to the positive input terminal from the voltage input to the negative input terminal in the comparator COMP by the amount of offset voltage prevents oscillation of the comparator COMP.

The first light-receiving element PD1, the first current amplifier CA1, and the first gain resistor GR1 constitute the first light detector D1. The second light-receiving element PD2, second current amplifier CA2, and the second gain resistor GR2 constitute the second light detector D2. That is, the comparator COMP compares the signal (received-light signal) output from the first light detector D1 with the signal (received-light signal) output from the second light detector D2.

The synchronous detection system 60 outputs a synchronization signal to the FPGA 600. The FPGA 600 generates a modulated signal (pulse signal) for each color based on image data, and outputs the modulated signal to the LD driver 6111 at a predetermined timing according to the timing of the synchronization signal. The LD driver 6111 applies a drive current according to the modulating signal for each color to the corresponding light-emitting element. Accordingly, the optical scanning device 10 draws a color image (intermediate image) according to image data on the screen 30.

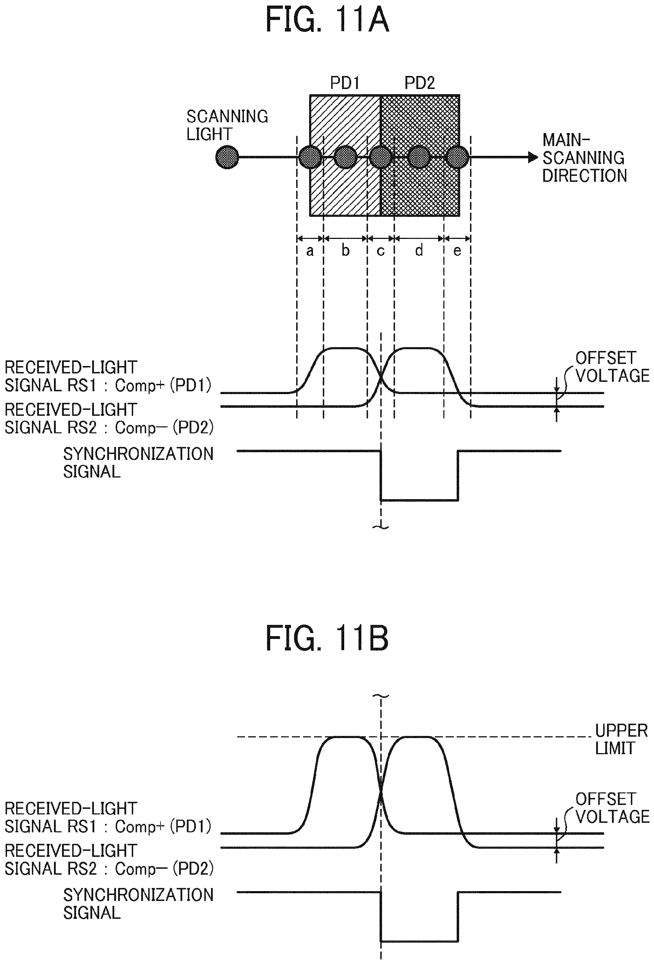

Each of FIGs. 11A and 11B is an illustration of ideal signal waveforms of a received-light signal RS1, a received-light signal RS2, and a synchronization signal in optically scanning the first light-receiving element PD1 and the second light-receiving element PD2. In this case, the received-light signal RS1 is a voltage signal to be input to the positive input terminal of the comparator COMP+ according to the electric current output from the first light-emitting signal PD1 scanned. Further, the received-light element RS2 is a voltage signal to be input to the negative input terminal of the comparator COMP- according to the electric current output from the second light-emitting element PD2. As illustrated in FIG. 11A, the scanning light scans an area a, an area b, an area c, an area d, and an area e in this recited order.

In the area a, the output power of the first light-receiving element PD1 increases (the potential of the received-light signal RS1 increases) as the scanning light advances toward and within the first light-receiving element PD1.

In the area b, the output power of the first light-receiving element RD1 is constant because the entire scanning light travels within the first light-receiving element PD1.

In the area c, the output power of the first light-receiving element PD1 decreases and the output power of the second light-receiving element PD2 increases (the potential of the received-light signal RS2 increases) as the scanning light advances toward and within the second light-receiving element PD2.

In the area c, the received-light signal RS1 intersects with the received-light signal RS2, at which time the comparator COMP reverses the polarity of the output voltage. At the intersecting timing, the falling signal (comparative signal) output from the comparator COMP is used as the synchronization signal.

In the area d, the entire scanning light travels within the second light-receiving element PD2, and thus the output power of the light-receiving element PD2 is constant.

In the area e, the output power of the second light-receiving element PD2 decreases as the scanning light advances beyond the second light-receiving element PD2.

At the time at which the voltage according to the electric current output from the second light-receiving element PD2 becomes less than or equal to the offset voltage, the comparator COMP reverses the polarity of the output voltage, thereby returning to the initial state.

As an ideal operation of the optical scanning device 10, the first intersection timing of the received-light signal RS1 and the received-light RS2 (the time at which the received-light signal RS1 intersects with the received-light signal RS2 for the first time) with reduced power of light emission of the LD (a first waveform example) in FIG. 11A coincides with the first intersection timing of the received-light signal RS 1 and the received-light RS2 with increased power of light emission of the LD (a second waveform example) in FIG. 11B. The output timing of the synchronization signal in the first waveform example of FIG. 11A also coincides with the output timing of synchronization signal in the second waveform example of FIG. 11B. This is because the comparative signal output from the comparator COMP at the intersection timing is used as a synchronization signal.

However, the optical scanning device 10 actually operates in a different manner from the above-described ideal operation due to the following three factors: Factor 1: changes in intensity distribution of laser light with fluctuations in power of light emission of the LD due to changes in temperature; Factor 2: responsivity of light emitting elements (PD); and Factor 3: overdriving of the comparator COMP.

A description is given of Factor 1 regarding changes in intensity distribution of laser light with fluctuations in power of light emission (light-emission power) of the LD. The intensity distribution of the laser light is a Gaussian distribution. Fluctuating power of light emission relatively changes the intensity distribution. Increasing power of light emission uniformly increases the intensity distribution of laser light (increases the effective diameter of laser light), thereby increasing areas in which the first light-receiving element PD1 and the second light-receiving element PD2 exhibit a response (receive light and output electric current). This accelerates the timing with which the waveforms of the received-light signals RS1 and RS2 start rising while retarding the timing with which the waveforms of the received-light signals RS1 and RS2 completely fall.

Next, Factor 2 regarding responsivity of light-emitting elements (photodiodes) is described. Photodiodes typically takes more time in emitting an electric charge after stopping receiving light than in generating electricity when receiving light. Thus, a received-light signal falls more gently than the received-light signal rises.

Factor 3, regarding the comparator COMP that compares the output voltage of the light-receiving element PD1 with the output voltage of the light-receiving element PD2 to output a synchronization signal (comparative signal), is described. The comparator COMP has characteristics of overdriving. Specifically, the potential difference between the received-light signals RS1 and RS2 after the first intersection of the received-light signal RS1 and the received-light signal RS2 changes the elapsed time from the time at which two input signals (the received-light signals RS1 and RS2) intersect with each other to the time at which the comparator COMP outputs a synchronization signal. Such an elapsed time is referred to also as a "delay time Td" or an "output delay time Td". In other words, the comparator COMP increases the delay time Td with a reduced potential difference between the received-light signals RS1 and RS2 after the first intersection of the received-light signals RS1 and RS2, and reduces the delay time Td with an increased potential difference between the received-light signals RS 1 and RS2 after the first intersection of the received-light signals RS1 and RS2.

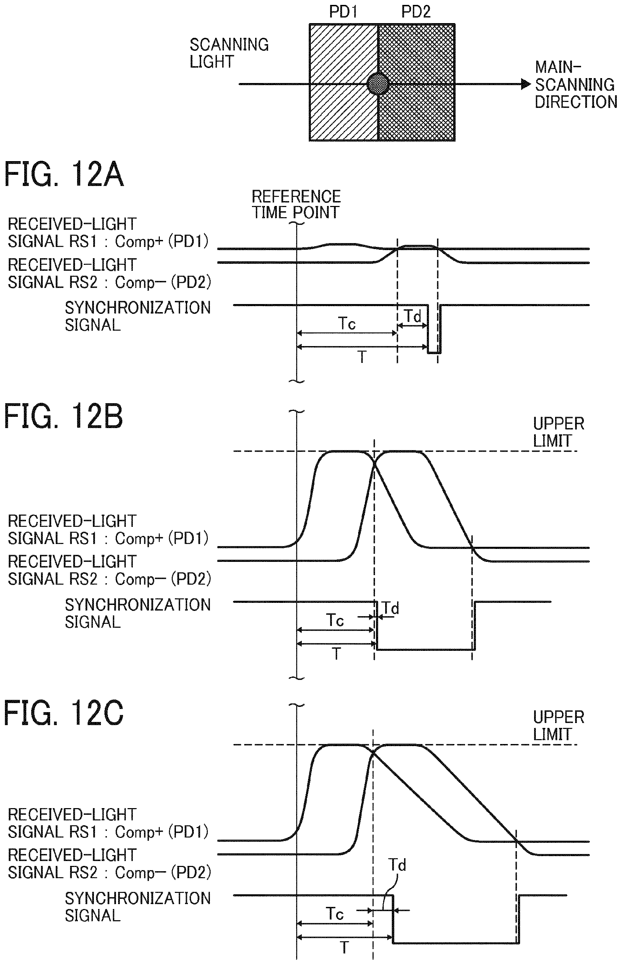

FIGs. 12A, 12B, and 12C are timing charts of the received-light signals RS1 and RS2, and the synchronization signal according to third, fourth, and fifth waveform examples, respectively, in which the LD changes light-emission power to scan the first light-receiving element PD1 and the second light-receiving element PD2 in consideration of the above-described factors 1 through 3. In FIGs. 12A through 12C, the symbol "T" denotes a time period (hereinafter, referred to also as "output time T") from a reference time point to the falling timing of the synchronization signal. In the present embodiment, the reference time point is a predetermined timing based on which, for example, the mirror 150 of the light deflector 15 operates. However, no limitation is intended herein. In some embodiments, the reference time point may be modified as appropriate.

The output time T is the sum of a time period (hereinafter, referred to also as an "intersection time Tc") from the reference time point to the first intersection timing of the received-light signals RS1 and RS2, and the delay time Td (see FIGs. 12A through 12C).

The third waveform example of FIG. 12A represents waveforms of the received-light signals RS1 and RS2 of light emitted by the LD at a small level of light-emission power Pth that is minimum within the range that allows the comparator COMP to output a synchronization signal.

This configuration reduces the effective diameter of laser light, thereby retarding the first intersection timing of the received-light signals RS1 and RS2, i.e., increasing the intersection time Tc. Further, the delay time Td increases due to a reduced potential difference between the received-light signals RS1 and RS2 after the first intersection timing of the received-light signals RS1 and RS2, thereby retarding the output timing of the synchronization signal, i.e., increasing the output time T.

The fourth waveform example of FIG. 12B represents waveforms of the received-light signals RS 1 and RS2 of light emitted by the LD at a medium level of light-emission power Pm that is greater than the light-emission power Pth.

This configuration accelerates the rising timing of the received-light signals RS1 and RS2, and makes the received-light signals RS1 and RS2 rise more sharply than the third waveform example does. This accelerates the first intersection timing of the received-light signals RS1 and RS2, thus reducing the intersection time Tc. Further, the potential difference between the received-light signals RS 1 and RS2 increases after the first intersection of the received-light signals RS1 and RS2, thereby reducing the delay time Td of the comparator COMP, thus accelerating the output timing of the synchronization, i.e., reducing the output time T, as compared to the third waveform example.

The fifth waveform example of FIG. 12C represents waveforms of the received-light signals RS 1 and RS2 of light emitted by the LD at a large level of light-emission power Pn that is greater than the light-emission power Pm.

In this configuration, the waveforms of the received-light signals RS1 and RS2 rise in a slightly changed manner relative to the fourth waveform example. This is because the output voltages of the first light-receiving element PD1 and the second light-receiving element PD2 reach saturation level due to the upper limit voltage. Accordingly, little change occurs in the first intersection timing of the received-light signals RS1 and RS2 (there is little change in intersection time Tc) as compared to the fourth waveform example. However, the received-light signals RS1 and RS2 fall more gently than the fourth waveform example. Thus, the potential difference between the received-light signals RS1 and RS2 gradually decreases after the first intersection of the received-light signals RS1 and RS2. Accordingly, the delay time Td of the comparator COMP in the fifth waveform example increases, in contrast to the fourth waveform example. Further, the output timing of a synchronization signal is delayed (the output time T slightly increases) in the fifth waveform example as compared to the fourth waveform example.

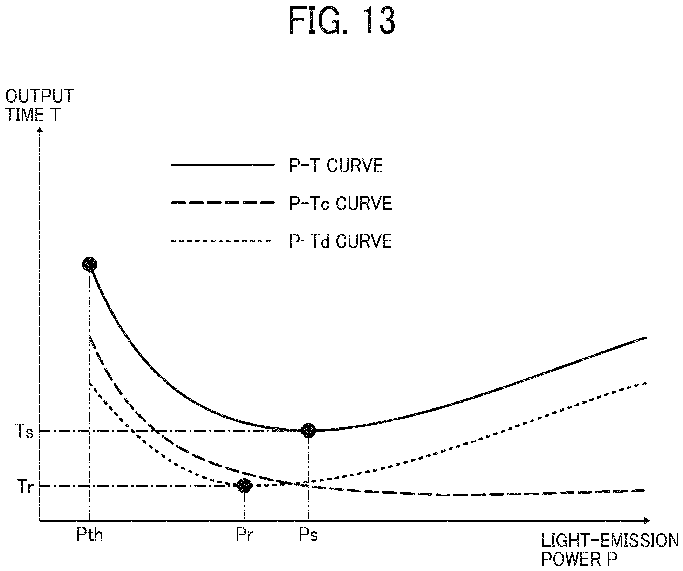

FIG. 13 is a graph of a function (called a "P-T curve" indicated by a solid line) of changes in output time T with variations in light-emission power P, a function (called a "P-Tc curve" indicated by a dashed line) of changes in intersection time Tc with variations in light-emission power P, and a function (called a "P-Td curve" indicated by a dotted line) of changes in delay time Td with variations in light-emission power P. Note that the P-T curve, P-Tc curve, and P-Td curve are substantially the same as in FIG. 13 even with changes in specification of the LD, the photodiode (light-emitting element), or the comparator.

The following first describes the P-Tc curve. As illustrated in FIG. 13, the intersection time Tc sharply decreases in the initial stage as the light-emission power P gradually increases from the level of Pth. This is because the received-light signals RS1 and RS2 increase the rate of increase in electrical potential with an increase in light-emission power. Subsequently, the intersection time Tc gradually ceases to change as the waveforms (output voltage) of the received-light signals RS1 and RS2 reach saturation level.

That is, the P-Tc curve monotonically decreases with an increase in light-emission power P. Further, the absolute value of a differential value with respect to the light-emission power P monotonically decreases with an increase in light-emission power P, in the P-Tc curve. In other words, the slope of a tangent line to the P-Tc curve decreases as the light-emission power P increases.

Next, a description is given of the P-Td curve. As illustrated in FIG. 13, the delay time Td is relatively large with the light-emission power P around the level of Pth because the potential difference between the received-light signals RS1 and RS2 after the first intersection thereof is relatively small. As the light-emission power P gradually increases in the range of from the level of the light-emission power Pth to a predetermined power Pr, the potential difference between the received-light signals RS1 and RS2 increases, thereby gradually reducing the delay time Td. However, when the light-emission power P exceeds the predetermined power Pr, the waveforms (output voltages) of the received-light signals RS1 and RS2 come to reach saturation level, thereby reducing the potential difference between the received-light signals RS1 and RS2 after the first intersection thereof. Thus, the delay time Td gradually increases.

In other words, the P-Td curve is a convex-downward curve that indicates a minimum value Tr at the predetermined power Pr. The absolute value (the slope of a tangent line) of the differential value with respect to the light-emission power P is minimum when the light-emission power P is within the range around the predetermined power Pr (the range in which the predetermined power P and any light-emission power close to the predetermined power Pr are included). The absolute value of the differential value is relatively large at any light-emission power that is less than the range around the predetermined power Pr. The absolute value of the differential value is relatively small at any light-emission power that is greater than the range around the predetermined power Pr.

More specifically, the absolute value of the differential value with respect to the light-emission power P in the P-Td curve monotonically decreases with an increase in light-emission power P, in a power region in which the light-emission power P is smaller than the predetermined power Pr. The absolute value of the differential value with respect to the light-emission power P in the P-Td curve monotonically increases with an increase in light-emission power P, in another power region in which the light-emission power P is greater than the predetermined power Pr.

The following describes the output time T, which is the sum of the intersection time Tc and the delay time Td. As illustrated in FIG. 13, the output time T sharply decreases as the transmit-emission power P gradually increases from the level of the light-emission power Pth. This is because both the intersection time Tc and the delay time Td sharply decrease. The output time T hits the bottom (minimum) when the light-emission power P reaches a predetermined power Ps. Subsequently, the output time T gradually increases when the light-emission power P exceeds the predetermined power Ps. The rate of decrease in the output time T is relatively large (the output time T significantly decreases), in a power region in which the light-emission power P is smaller than the predetermined power Ps. This is because both the intersection time Tc and the delay time Td decrease with an increase in light-emission power P. Further, the rate of increase in the output time T is relatively small, in another power region in which the light-emission power P is greater than the predetermined power Ps. This is because the intersection time Tc is substantially constant and only the delay time Td increases as the light-emission power P increases in the power region in which the light-emission power P is greater than the predetermined power Ps.

In other words, the P-T curve is a convex-downward curve that indicates a minimum value Ts at the predetermined power Ps. The absolute value (the slope of a tangent line) of the differential value with respect to the light-emission power P is minimum when the light-emission power P is within the range around the predetermined power Ps (the range in which the predetermined power P and any light-emission power close to the predetermined power Ps are included). The absolute value of the differential value is relatively large with any light-emission power that is less than the range around the predetermined power Ps. The absolute value of the differential value is relatively small with any light-emission power that is greater than the range around the predetermined power Ps.

More specifically, the absolute value of the differential value with respect to the light-emission power P in the P-T curve monotonically decreases with an increase in light-emission power P, in a power region in which the light-emission power P is smaller than the predetermined power Ps. The absolute value of the differential value with respect to the light-emission power P in the P-T curve monotonically increases with an increase in light-emission power P, in a power region in which the light-emission power P is greater than the predetermined power Ps.

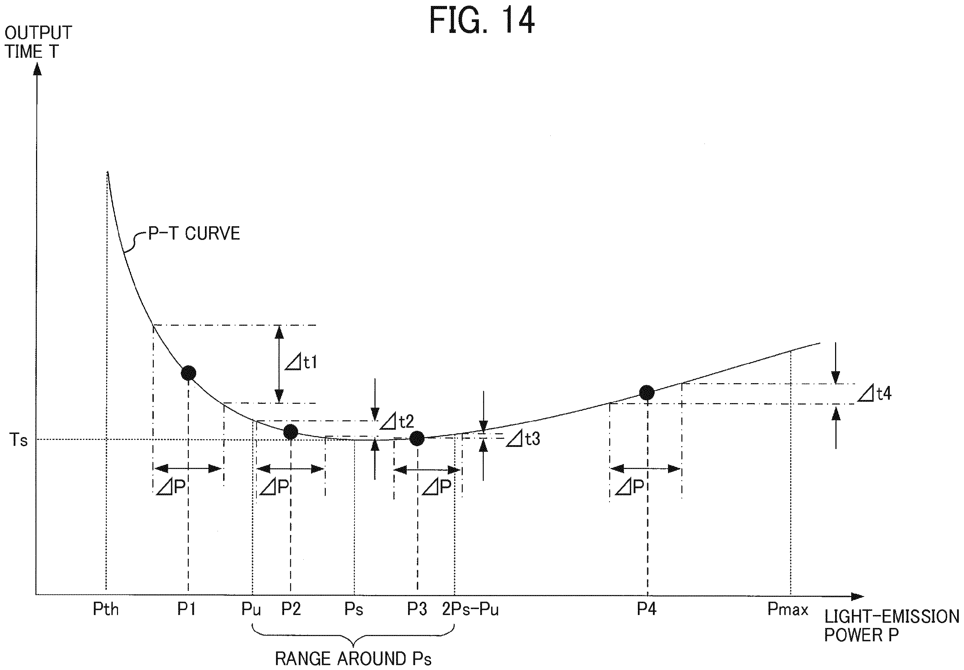

The absolute value of the differential value with respect to the light-emission power P in the P-T curve in the power region in which the light-emission power P is greater than the predetermined power Ps is maximum at the maximum light-emission power Pmax (see FIG. 14) that is determined by a maximum permissible input current (maximum rated current) in conformity with the standards and specifications of LDs. The maximum value is represented as Dmax. In the present embodiment, the range around the predetermined power Ps may be defined as a "range from Pu to (2Ps - Pu)" when Pu (smaller than the predetermined power Ps) is a light-emission power to achieve Dmax (the maximum value) for the absolute value of the differential value with respect to the light-emission power P in the P-T curve in the power region in which the light-emission power P is smaller than the predetermined power Ps. Any light-emission power P other than the predetermined light-emission power Ps within the range around the predetermined power Ps is referred to as "light-emission power P close to the predetermined power Ps".

In the P-T curve, the absolute value D+ of the differential value at a light-emission Ps + ξ is smaller than the absolute value D- of the differential value at a light-emission Ps - ξ. That is, D+ is smaller than D-.

The light-emission power P of the LD deviates from a target value Pt according to, e.g., changes in temperature, which leads to the variations in output time T. In particular, LDs for use in the HUD 100 mounted on a mobile object, such as a vehicle, have the light-emission power P significantly deviated from the target value Pt due to changes in position of a mobile object or changes in temperature as time passes (morning, noon, and night). For this reason, the output time T of LDs varies significantly. The variations in output time T adversely affects the drawing of images. Thus, such variations in output time T are preferably reduced.

FIG. 14 is an illustration of the relation between the variation ranges of the light-emission power P for each power region and the variation ranges of the output time T in the P-T curve.

As illustrated in FIG. 14, with the target value Pt of the light-emission power P set to a light-emission power P1 that is less than the range around the predetermined power Ps, the variation range of the output time T is Δt1 relative to the variation range around the light-emission power P1 of ΔP.

Further, with the target value Pt of the light-emission power P set to a light-emission power P2 that is less than the predetermined power Ps and within the range around the predetermined power Ps, the variation range of the output time T is Δt2 (less than Δt1) relative to the variation range around the light-emission power P2 of ΔP.

With the target value Pt of the light-emission power P set to a light-emission power P3 that is greater than the predetermined power Ps and within the range around the predetermined power Ps, the variation range of the output time T is Δt3 (less than Δt2) relative to the variation range around the light-emission power P3 of ΔP. In this case, P3 - Ps is equal to Ps - P2.

With the target value Pt of the light-emission power P set to a light-emission power P4 that is greater than the range around the predetermined power Ps, the variation range of the output time T is Δt4 relative to the variation range around the light-emission power P4 of ΔP.

As a result, Δt3 is less than Δt2, Δt2 is less than Δt4, and Δt4 is less than Δt1.

Accordingly, setting the target value Pt of the light-emission power P to any value, such as P3 or P4, greater than or equal to the light-emission power Ps in scanning at least the light-receiving element pair 61 can reduce the variation range Δt of the output time T of a synchronization signal relative to the variation range of the light-emission power P of ΔP, as compared to the case of setting the target value Pt of the light-emission power P to any value, such as P1, less than the light-emission power Pu.

Setting the target value Pt of the light-emission power P within the range around the predetermined power Ps, such as P2 or P3, in scanning at least the light-receiving element pair 61 can reduce the variation range Δt of the output time T of a synchronization signal relative to the variation range of the light-emission power P of ΔP, as compared to the case of setting the target value Pt of the light-emission power P to any value, such as P1, less than the light-emission power Pu.

Setting the target value Pt of the light-emission power P to any value, such as P2, P3, or P4, greater than or equal to the light-emission power Pu in scanning at least the light-receiving element pair 61 can reduce the variation range Δt of the output time T of a synchronization signal relative to the variation range of the light-emission power P of ΔP, as compared to the case of setting the target value Pt of the light-emission power P to any value, such as P1, less than the light-emission power Pu.

In the above-described configurations, increasing the target value Pt increases power consumption and the amount of ghost light, such as unnecessary light reflected or scattering within the optical scanning device 10. In consideration of such circumstances, the target value Pt of the light-emission power P is preferably set to any value, such as P2 or P3, close to the light-emission power Ps as much as possible.

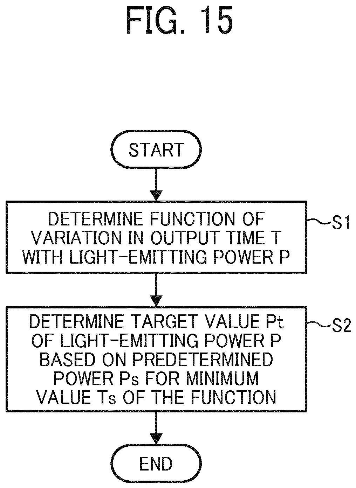

Next, a description is given of a process of setting a target value Pt for light-emission power (a light-emission-power target setting process), referring to the flowchart in FIG. 15. The light-emission-power target setting process is performed by the control system 6000 according to an instruction from an operator in manufacturing the HUD 100.

In the first step S1, the control system 6000 determines a function (the P-T curve) that represents the variations in output time T with the light-emission power P. More specifically, the control system 6000 changes the light-emission power P of one LD (which is referred to also as a "synchronized illuminating LD") of three LDs (the light-emitting element 111R, the light-emitting element 111G, and the light-emitting element 111B) within the range of from Pth to Pmax to obtain data regarding the output time T for each light-emission power. Plotting the obtained data forms the P-T curve.

In step S2, the control system 6000 sets the target value Pt of the light-emission power P based on the predetermined power Ps at which the function (the P-T curve) indicates the minimum value Ts. Specifically, the control system 6000 sets the target value Pt greater than or equal to Pu, more preferably close to Ps, and stores the set target value Pt in the RAM 606.

Note that, the above-described light-emission-power target setting process may be performed, for example, in performing maintenance in addition to in manufacturing the HUD 100.

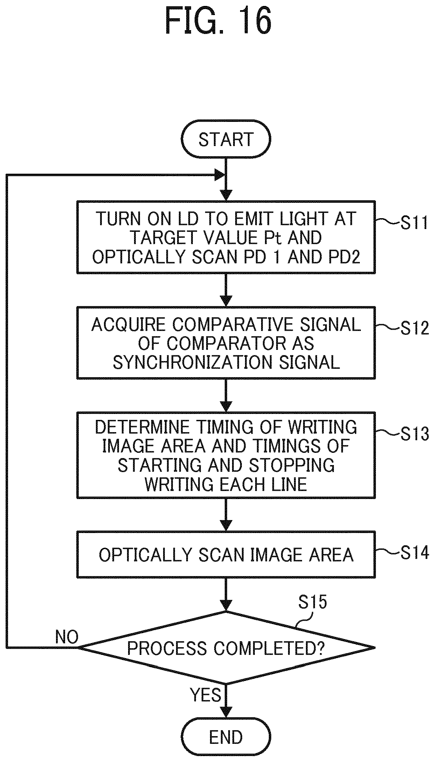

The following describes the image display process using the HUD 100, referring to FIG. 16. The FPGA 600 starts the image display process when the above-described light-emission power target setting process is completed and the HUD 100 mounted on a vehicle is electrically activated. FIG. 16 is a flowchart of a series of computational algorithms executed by the FPGA 600 according to the present embodiment.

In the first step S11, the FPGA 600 turns on the LD (the synchronized illuminating LD) to emit light at the target value Pt to scan the first light-emitting element PD1 and the second light-emitting element PD2 of the first light detector D1 and the second light detector D2, respectively. Specifically, the FPGA 600 reads out the target value Pt stored in the RAM 606, and generates a modulation signal according to the target value Pt. The FPGA 600 further causes the LD driver 6111 to apply a drive current to the synchronized illuminating LD, and the synchronized illuminating LD emits light with the amount of light emission (the variation range ΔP around Pt) according to the target value Pt of the light-emission power P.

In step S12, the FPGA 600 receives a comparative signal as a synchronization signal of the comparator COMP as a synchronization signal. Specifically, the FPGA 600 acquires a comparative signal of the comparator COMP having received the received-light signals RS1 and RS2 from the first light detector D1 and the second light detector D2, respectively.

In step S13, the FPGA 600 determines the timing of writing an image in an image area, the timing of starting writing an image in each line, and the timing of stopping writing. Specifically, the FPGA 600 determines the timing of writing an image in an image area (frame), the timing of starting writing an image in each line, and the timing of stopping writing based on the timing of the synchronization signal, the horizontal synchronization frequency, and vertical synchronization frequency.

In step S14, the FPGA 600 scans the image area 30a with scanning light. More specifically, the FPGA 600 generates a modulation signal for each color based on image data, and outputs the modulation signal to the LD driver 6111 at a predetermined timing according to the timing of the synchronization signal. The LD driver 6111 applies a drive current according to the modulation signal for each color to the corresponding LD. Accordingly, the viewer A visually identify, through the front window 50, an image (intermediate image) of the virtual image formed (drawn) on the screen 30 by the optical scanning device 10. The light-emission power P of the LD to scan the image area 30a may be greater than or equal to Ps or less than Ps, or may be greater than or equal to Pu, or less than Pu.

In the next step S15, the FPGA 600 determines whether the process is completed. When a negative determination is made in step S15, the process shifts to step S11. When an affirmative determination is made in step S15, the process ends. Specifically, the affirmative determination is made in S15 when the vehicle on which the HUD 100 is mounted is electrically turned off, and the negative determination is made when the vehicle remains ON.

As is found from the description above, the FPGA 600 repeats step S11 through step S15 of the image display process for each frame.

The optical scanning device 10 according to the present embodiment includes an LD (light-source device 11), an optical scanning system (11 and 15), a first light detector D1, a second light detector D2, a comparator COMP, and a controller (the CPU 602). The optical scanning system (11 and 15) is disposed along an optical path of light emitted from the LD and includes the light deflector 15 and the scanning mirror 20. The first light detector D1 includes a first light-receiving element PD1 and the second light detector D2 includes a second light-receiving element PD2. The first light-receiving element PD1 and the second light-element PD2 are disposed side by side along a main-scanning direction within the scanning area. The comparator COMP compares received-light signals of the first light detector D1 and the second light detector D2 and outputs a synchronization signal. The CPU 602 sets the target value Pt of the light-emission power P of the LD to scan the first light-receiving element PD1 and the second-receiving element PD2, based on a light-emission power Ps of the LD, at which an output time T from a reference time point to a timing when the comparator COMP outputs the synchronization signal (comparative signal) is a minimum value Ts.

This configuration that sets the light-emission power P based on, for example, the light-emission power Ps allows the LD to emit light at the light-emission power P within a power region in which the amount of variation in the output time T is small relative to the variation in the light-emission power P.

This can reduce differences in output timing of the comparative signals.

The first light-receiving element PD1 and the second light-receiving element PD2 of the first light detector D1 and the second light detector D2 are preferably disposed adjacent to each other in the main-scanning direction. Alternatively, in some embodiments, the first light-receiving element PD1 and the second light-receiving element PD2 may be slightly spaced apart from each other as long as the falling received-light signal RS1 and the rising received-light signal RS2 intersect with each other.

The target value Pt is preferably set greater than or equal to the predetermined power Ps. This configuration can reliably reduce the differences in timings of outputting the comparative signals. The target value Pt is preferably set close to the predetermined power Ps. This configuration can reduce the difference in output timing of the comparative signal as much as possible.

In the function (the P-T curve) of the variations in output time T with the light-emission power P, the target value Pt is preferably set within the range of from Pu to (2Ps - Pu) where Pu denotes a light-emission power at which an absolute value of a differential value with respect to the light-emission power P is Dmax in the power region in which the light-emission power P is less than the predetermined power Ps in the P-T curve. In this case, Dmax denotes a maximum value of the absolute value of the differential value with respect to the light-emission power P in the power region in which the light-emission power P is greater than the predetermined power Ps. This configuration can reduce the differences in output timing of the comparative signals.

Further, the relation of Δta > Δtb is preferably satisfied where Δta denotes a variation range of the output time T relative to a variation range ΔP of the light-emission power P when the target value Pt is set less than the light-emission power Pu, and Δtb denotes another variation range of the output time T relative to the variation range ΔP of the light-emission power P when the target value Pt is set within the range of from Pu to (2Ps - Pu). This configuration can reliably reduce the differences in output timing of the comparative signals.

Further, the target value Pt is preferably set greater than or equal to Pu where Pu denotes a light-emission power at which the absolute value of the differential value with respect to the light-emission power P is Dmax in the power region in which the light-emission power P is less than the predetermined power Ps in the function (the P-T curve) of the variations in output time T with light-emission power P. In this case, Dmax denotes a maximum value of the absolute value of the differential value with respect to the light-emission power P in the power region in which the light-emission power P is greater than the predetermined power Ps. This configuration can reduce the differences in output timing of the comparative signals.

Further, the relation of Δtc > Δtd is preferably satisfied where Δtc denotes a variation range of the output time T relative to a variation range ΔP of the light-emission power P when the target value Pt is set less than the light-emission power Pu, and Δtd denotes another variation range of the output time T relative to the variation range ΔP of the light-emission power P when the target value Pt is set greater than or equal to the light-emission power Pu. This configuration can reliably reduce the differences in output timing of the comparative signals.

The output time T is the sum of an intersection time Tc and a delay time Td. The intersection time Tc is a time period from the reference time point to a time at which the received-light signal RS1 and the received-light signal RS2 of the first light detector D1 and the second light detector D2 first intersect with each other. The delay time Td is a delay time period from the intersection time Tc to a time at which the comparator COMP outputs a synchronization signal.

The intersection time Tc monotonically decreases as the light-emission power P increases from the minimum power Pth that allows the comparator COMP to output a comparative signal.

In the function (the P-Tc curve) of the variations in intersection time Tc with the light-emission power P, the absolute value of the differential value at the light-emission power Ps - ε is greater than the absolute value of the differential value at the light-emission power Ps + ε where ε is a positive number. In this case, Ps + ε is less than or equal to the maximum rated output of the LD.

The delay time Td changes to reach a minimum value at a predetermined power Pr that is less than the light-emission power Ps as the light-emission power P increases from the minimum power Pth that allows the comparator COMP to output a comparative signal.

In the function (the P-Td curve) of the variations in delay time Td with the light-emitting power P, the absolute value of the differential value at the light-emission power Pr - δ is greater than the absolute value of the differential value at the light-emission power Pr + δ where δ is a positive number. In this case, Pr + δ is less than or equal to the maximum rated output of the LD.

In the function (the P-T curve) of the variations in output time T with the light-emitting power P, the absolute value of the differential value at the light-emission power Ps - ξ is greater than the absolute value of the differential value at the light-emission power Ps + ξ where ξ is a positive number. In this case, Ps + ξ is less than or equal to the maximum rated output of the LD.

The HUD 100 includes the optical scanning device 10 and a control system 6000. The control system 6000 includes the FPGA 600 to turn on the LD to emit light at the target value Pt of the light-emission power P to scan the first light-receiving element PD1 and the second light-receiving element PD2 of the first light detector D1 and the second light detector D2. The control system 6000 controls turning on and off of the LD based on the comparative signals from the comparator COMP. This configuration can display virtual images with high visibility.

Further, a mobile object device that includes the HUD 100 and an automobile (a mobile object), on which the HUD 100 is mounted, can provide an operator of the mobile object with a high-visibility image.

The optical scanning method according to the present embodiment includes turning on an LD of an optical scanning device 10 to emit light at the light-emission power P having the target value Pt to optically scan the first light-receiving element PD1 of the first light detector D1 and the second light-receiving element PD2 of the second light detector D2, and controlling the LD to emit the light based on a comparative signal output from a comparator, to scan an effective scanning area and an area surrounding the effective scanning area.

This configuration allows the LD to emit light at the light-emission power P in the power region the amount of a variation in output time T is small relative to a variation in light-emission power P.

Thus, the difference in timing of output of the synchronized signal (compared signal) can be reduced.

The synchronization signal acquisition method includes determining a function (a P-T curve) of variations in an output time T with a light-emission power P of an LD (a light-source device 11) and setting a target value Pt of the light-emission power P of the LD based on a predetermined power Ps at which the output time T is a minimum value Ts in the function, to scan a first light-receiving element PD1 and a second light-receiving element PD2 of a first light detector D1 and a second light detector D2 with light emitted from the LD and acquire a comparative signal as a synchronization signal output from a comparator having received received-light signals (detection signals) of the first light detector D1 and the second light detector D2. The first light-receiving element PD1 and the second light-receiving element PD2 are disposed side by side along the main-scanning direction. The output time T is a time period from a reference time point to a time at which a comparator outputs a comparative signal as a synchronization signal.

This configuration allows the LD to emit light at a light-emission power P set based on, for example, the predetermined power Ps in the power region in which the amount of a variation in output time T is small relative to a variation in the light-emission power P.

Thus, the differences in timings of outputting the synchronization signals (comparative signals) can be reduced.

### <Laser Printer>

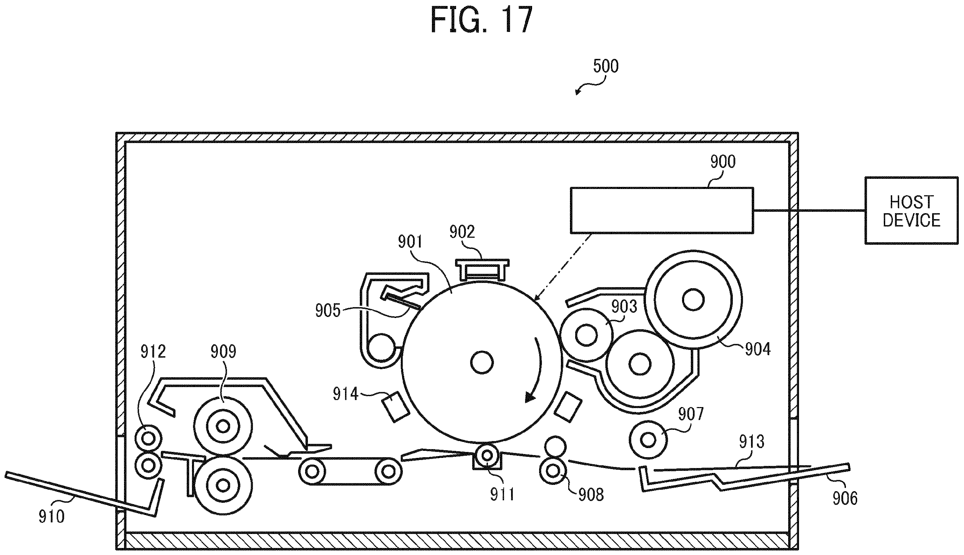

FIG. 17 is a schematic view of a configuration of a laser printer 500 as an image forming apparatus according to an embodiment of the present disclosure.

The laser printer 500 includes an optical scanner 900 as an optical scanning device, a photoconductor drum 901, a charger 902, a developing roller 903, a toner cartridge 904, a cleaning blade 905, a paper feed tray 906, a paper feed roller 907, a registration roller 908, a transfer charger 911, a discharger 914, a fixing roller 909, an ejection roller 912, and an ejection tray 910.

Around the surface of the photoconductor drum 901 are disposed the charger 902, the developing roller 903, the transfer charger 911, the discharger 914, and cleaning blade 905. In this case, the charger 902, the developing roller 903, the transfer charger 911, the discharger 914, and the cleaning blade 905 are disposed in this recited order, along the direction of rotation of the photoconductor drum 901.

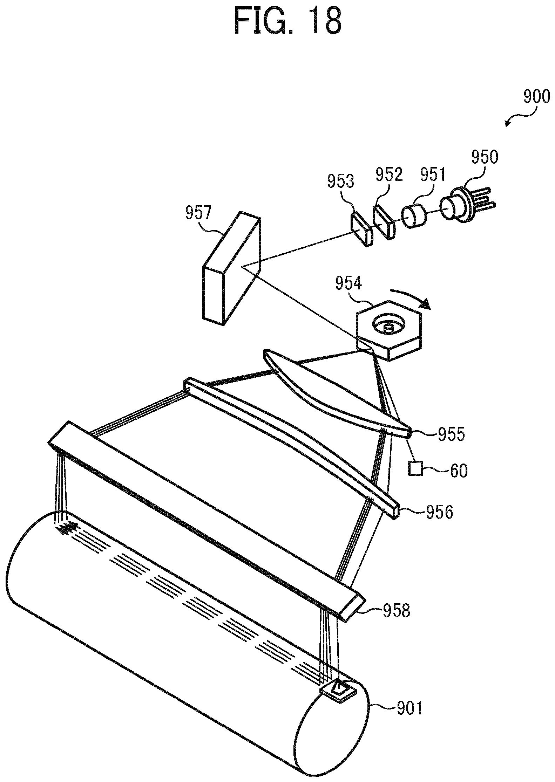

A photosensitive layer is formed on the surface of the photoconductor drum 901. The photoconductor drum 901 rotates in the direction of the arrow as illustrated in FIG. 18.

The charger 902 evenly charges the surface of the photoconductor drum 901.

The laser printer 500 also includes the synchronous detection system 60 at the surrounding area of the effective scan area within the scanning range of scan light (refer to FIG. 1). The laser printer 500 executes the same setting process of a target value for power of light emission as in FIG. 15 and performs the same image forming process as in FIG. 16 using the set target value for power of light emission.

The optical scanner 900 scans the surface of the photoconductor drum 901 electrically charged by the charger 902 with light modulated based on image data received from a host device, e.g., a personal computer (PC). Accordingly, a latent image corresponding to image data is formed on the surface of the photoreceptor drum 901. The latent image formed as above moves towards the developing roller 903 with rotation of the photoconductor drum 901. A description is given later of the configuration of the optical scanner 900.

The toner cartridge 904 stores toner that is to be supplied to the developing roller 903.

The developing roller 903 renders a latent image visualized by making the toner supplied from the toner cartridge 904 adhere to the latent image formed on the surface of the photoconductor drum 901. The latent image, to which toner is adhering, moves toward the transfer charger 911 with the rotation of the photoconductor drum 901.

The paper feed tray 906 stores recording paper 913 therein. The paper feed roller 907 is disposed near the paper feed tray 906, and the paper feed roller 907 takes a piece of recording paper 913 from the paper feed tray 906 one by one and conveys the taken recording sheet to the registration roller 908. The registration roller 908 is disposed near the transfer roller 911. The registration roller 908 temporarily holds the recording paper 913 taken by the paper feed roller 907 and sends the recording paper 913 to a space between the photoconductor drum 901 and the transfer charger 911 with rotation of the photoconductor drum 901.

The transfer charger 911 has a voltage having a polarity opposite to the polarity of toner to electrically attract toner from the surface of the photoconductor drum 901 onto the recording paper 913. Accordingly, the latent image is transferred from the surface of the photoconductor drum 901 onto the recording paper 913. The recording paper 913 onto which the toner image has been transferred is conveyed to the fixing roller 909.

At the fixing roller 909, heat and pressure are applied to the recording paper 913 to fix the toner on the recording paper 913. The recording paper 913 on which the toner is fixed is conveyed to the paper output tray 910 through the ejection roller 912 so that the recording paper 913 is stacked on the paper output tray 910 one after another.

The discharger 914 removes electricity from the surface of the photoconductor drum 901.

The cleaning blade 905 removes the residual toner on the surface of the photoconductor drum 901. Note that the removed residual toner is to be reused. The surface of the photoconductor drum 901 from which the residual toner has been removed moves back again to a position where the surface of the photoconductor drum 901 faces the charger 902.

### <Optical Scanner>

The following describes the configuration and operation of the optical scanner 900, referring to FIG. 18.

The optical scanner 900 includes a light-source unit 950 including a surface-emitting laser array in which a plurality of surface-emitting lasers (VCSEL) are arranged in an array, a coupling lens 951, an aperture 952, a cylindrical lens 953, a polygon mirror 954, an fθ lens 955, a toroidal lens 956, two mirrors (a first mirror 957 and a second mirror 958), a synchronous detection system 60, and a main controller for an overall control of the above-listed elements. In some embodiments, the light-source unit 950 may include a different type of light source, such as the LD, than the VCSEL.

The coupling lens 951 shapes a light beam emitted from the light-source unit 950, into a substantially parallel light beam.

The aperture 952 defines the beam diameter of the light beam having passed through the coupling lens 951.

The cylindrical lens 953 collects the beam having passed through the aperture 952 onto the first mirror 957 so that the light beam reflected by the first mirror 957 reaches the reflection plane of the polygon mirror 954.

The polygon mirror 954 is a low-height regular hexagonal prism having six deflecting surface on the lateral side thereof. A rotation device rotates the polygon mirror 954 at a constant angular velocity in the direction of the arrows as illustrated in FIG. 15. That is, the light-source unit 950 emits a light beam, and the emitted light travels to the cylindrical lens 953. The cylindrical lens 953 collects the light beam onto the deflecting surface of the polygon mirror 954 via the first mirror 957. The polygon mirror 954 rotates to deflect the light beam at a constant angular velocity.

That is, the fθ lens 955 moves, with constant velocity, an image plane of the light beam deflected by the polygon mirror 954 at a constant angular velocity, along the main scanning direction. The image plane has an image height proportional to the angle at which the light beam coming from the polygon mirror 954 enters the fθ lens 955.

The light beam having passed through the toroidal lens 956 is reflected by the second mirror 958, and an image of the light beam is formed on the surface of the photoconductor drum 901.

In the synchronous detection system 60, the first light-receiving element PD1 and the second light-receiving element PD2 of the first light detector D1 and the second light detector D2 are arranged side by side along the main-scanning direction on the optical path of the light beam that has been deflected by the polygon mirror 954 and has passed through the fθ lens 955 to the surrounding area of the effective scanning area. In this case as well, the surface-emitting lasers of the light-source unit 950 emit light based on the target value Pt of power of light emission that is set in the setting process of the target value for the power of light emission, and the emitted light (scan light) scans the light-receiving elements PD1 and PD2 in this recited order. This configuration can reduce the differences in timings of outputting synchronization signals (comparative signals).

The above-described laser printer 500 includes the photoconductor drum 901 (image bearer) and the optical scanner 900 to scan the surface of the photoconductor drum 901 with scan light. This configuration can successfully reproduce and form an image.

The optical scanner 900 according to the present disclosure is also applicable to an image forming apparatus, such as a color printer or color copier, including a plurality of photoconductor drums. Such multi-color image forming apparatus may include a plurality of optical scanners 900 that share, for example, a polygon mirror.

In the above-described embodiments, the process for setting a target value for power of light emission as illustrated in FIG. 15 is performed by an operator in manufacturing the HUD 100. In some embodiments, in alternative to or in addition to this configuration, a control system that includes, for example, the FPGA 600 may control the optical scanner 10 to perform the process of FIG. 15 regularly or irregularly.

In some embodiments, the synchronous detection system 60 may include the first light-receiving element PD1 and the second light-receiving element PD2, a first current-voltage converter and a second current-voltage converter, and a first operational amplifier (OA) and a second OA. The first current-voltage converter and the second current-voltage converter convert electric currents output from the first light-receiving element PD1 and the second light-receiving element PD2 into voltages, respectively. The first OA and the second OA amplify the voltages and output the amplified voltages to a comparator COMP.

In some embodiments, a plurality of synchronous detection systems 60 may be disposed outside the effective scanning area (at the surrounding area of the effective scanning area) of the scanning range. Such a configuration that employs a plurality of synchronous detection systems increases in cost compared to the configuration that employs one synchronous detection system. However, the configuration with a plurality of synchronous detection systems can accurately detect the scanning timing, and can further detect the scanning timing even when any of the light detectors of the synchronous detection systems 60 is damaged. Further, in some embodiments, the synchronous detection system 60 may include three or more photodiodes.

In some embodiments, the synchronous detection system 60 may include a light-receiving element, such as a phototransistor, instead of the photodiode.

The above-described HUD includes the optical deflector 15 as a deflective device (the MEMS scanner with two axes). Alternatively, in some embodiments, the optical deflector 15 that is a combination of two MEMS scanners each with a micro-mirror that is rotatable about one axis may be used in the HUD 100. Examples of one or two scanners may include, but is not limited to, the MEMS scanner and a galvano scanner

In the above-described embodiments, the projector is a concave mirror 40. However, the present disclosure is not limited to the configuration, and the projector may be a convex surface.

The HUD according to the above-described embodiments includes the scanning mirror 20, but may not include the scanning mirror 20. In other words, the HUD 100 may allow light deflected by the optical deflector 15 to directly go to the screen 30 or to pass through the convex lens and go to the screen 30. Alternatively, a planar mirror may be used as the scanning mirror 20.

In the HUD according to the above-described embodiment, the LD is used as the light source. Alternatively, other types of light source, such as vertical-cavity surface-emitting lasers (VCSEL), may be used.

Moreover, the transmission and reflection member is not limited to the front window of the mobile object, but may be a different window (window), such as a side glass and a rear glass. That is, the transmission and reflection member is disposed in the mobile object for the visual recognition of the outside of the mobile object.

In the above-described embodiment, cases in which the image display apparatus (HUD) is provided for a mobile object such as a vehicle, an aircraft, a ship, and a mobile object, such as a robot, were described. However, no limitation is indicated thereby, and modification may be made as long as the image display apparatus is provided for an object. The term "object" includes not only a mobile object but also an object that is located on a permanent basis or an object that is transportable.

The image display apparatus of the present disclosure is also applicable not only to the HUD but also to, for example, electronic device, such as a head mount display (HMD), a prompter, or a projector.

For example, in the case that the image display is applied to a projector, the projector can be configured in the same manner as in the HUD 100. In other words, image light is projected onto a projection screen or a wall through the concave mirror 40. Alternatively, image light may be projected onto a projection screen or a wall through the screen 30 without the concave mirror 40. In alternative to the concave mirror 40, any desired free-form surface mirror may be provided.

Further, the specific numerical values and shapes in the above-described embodiments are just examples and are appropriately modified without departing from the scope of the present disclosure.

## Claims

1. An optical scanning device (10) comprising:
a light-source device (11) to emit light to scan a scanning range;
an optical scanning system (11, 15) disposed on an optical path of the light emitted from the light-source device (11);
a first light detector (D1) including a first light-receiving element (PD1);
a second light detector (D2) including a second light-receiving element (PD2),
the first light-receiving element (PD1) and the second light-receiving element (PD2) disposed side by side along a main scanning direction in the scanning range and configured to respectively output a first detection signal and a second detection signal; and
a comparator (COMP) configured to compare the first detection signal of the first light detector (D1) and the second detection signal of the second light detector (D2) and output a comparative signal;
**characterised in that** the optical scanning device further comprises:
a control system (6000) configured to set a target value (Pt) of a light-emission power (P) of the light-source device (11) based on a level Ps of the light-emission power (P) at which an output time (T) has a minimum value, the light-emission power (P) having the target value (Pt) to be used for scanning the first light-receiving element (PD1) and the second light-receiving element (PD2), and
wherein the control system is configured to determine a function (P-T) of variations in the output time (T) with the light emission power (P), the output time (T) being a time period from a reference time point to a time at which the comparator (COMP) outputs the comparative signal.

2. The optical scanning device (10) according to claim 1,
wherein the control system (6000) is configured to set the target value (Pt) greater than or equal to the level Ps.

3. The optical scanning device (10) according to claim 1,
wherein the control system (6000) is configured to set the target value (Pt) to be any value other than the level Ps within a range around the level Ps.

4. The optical scanning device (10) according to claim 1 or 3,
wherein the control system (6000) is configured to set the target value (Pt) within a range of from Pu to (2Ps - Pu) in a function (P-T) of variations in the output time (T) with the light-emission power (P),
where
Pu is a level of the light-emission power (P) at which an absolute value of a differential value with respect to the light-emission power (P) in the function (P-T) is Dmax in a first power region where the light-emission power (P) is less than Ps in the function (P-T), and
Dmax is a maximum value of the absolute value of the differential value with respect to the light-emission power (P) in a second power region where the light-emission power (P) is greater than the level Ps in the function (P-T).

5. The optical scanning device (10) according to claim 4,
wherein the function (P-T) satisfies a relation Δta > Δtb,
where
Δta is a variation range of the output time (T) relative to a variation range (ΔP) of the light-emission power (P) having the target value (Pt) set less than Pu, and
Δtb is another variation range of the output time (T) relative to the variation range (ΔP) of the light-emission power (P) having the target value (Pt) set within the range of from Pu to (2Ps - Pu).

6. The optical scanning device (10) according to claim 1,
wherein the control system (6000) is configured to set the target value (Pt) greater than or equal to Pu in a function (P-T) of variations in the output time (T) with the light-emission power (P),
where
Pu is a level of the light-emission power (P) at which an absolute value of a differential value with respect to the light-emission power (P) in the function (P-T) is Dmax in a first power region where the light-emission power (P) is less than Ps in the function (P-T), and
Dmax is a maximum value of the absolute value of the differential value with respect to the light-emission power (P) in a second power region where the light-emission power (P) is greater than Ps in the function (P-T).

7. The optical scanning device (10) according to claim 6,
wherein the function (P-T) satisfies a relation Δtc > Δtd,
where
Δtc is a variation range of the output time (T) relative to a variation range (ΔP) of the light-emission power (P) having the target value (Pt) set less than Pu, and
Δtd is another variation range of the output time (T) relative to the variation range (ΔP) of the light-emission power (P) having the target value (Pt) set greater than or equal to Pu.

8. The optical scanning device (10) according to any one of claims 1 through 7,
wherein the output time (T) is a sum of an intersection time (Tc) and a delay time (Td),
wherein the intersection time (Tc) is a time period from a reference time point to a time at which the detection signals of the first light detector (D1) and the second light detector (D2) first intersect with each other, and
the delay time (Td) is a time period from the intersection time (Tc) to a time at which the comparator (COMP) outputs the comparative signal.

9. The optical scanning device (10) according to claim 8,
wherein the intersection time (Tc) monotonically decreases as the light-emission power (P) increases from a minimum power (Pth) at which the comparator (COMP) outputs the comparative signal.

10. The optical scanning device (10) according to claim 8 or 9,
wherein an absolute value of the differential value at the light-emission power (P) of Ps - ε is greater than another absolute value of the differential value at the light-emission power (P) of Ps + ε where ε is a positive number, in a function (P-Tc) of variations in the intersection time (Tc) with the light-emission power (P).

11. The optical scanning device (10) according to any one of claims 8 through 10,
wherein the delay time (Td) changes to reach a minimum value at another predetermined level Pr of the light-emission power (P), which is less than the level Ps, as the light-emission power (P) increases from the minimum power at which the comparator (COMP) outputs the comparative signal.

12. The optical scanning device (10) according to any one of claims 8 through 11,
wherein an absolute value of the differential value at the light-emission power (P) of Pr - δ is greater than another absolute value of the differential value at the light-emission power (P) of Pr + δ where δ is a positive number, in a function (P-Tc) of variations in the delay time (Td) with the light-emission power (P).

13. The optical scanning device (10) according to any one of claims 1 through 12,
wherein an absolute value of the differential value at the light-emission power (P) of Ps - ξ is greater than another absolute value of the differential value at the light-emission power (P) of Ps + ξ where ξ is a positive number, in a function (P-T) of variations in the output time (T) with the light-emission power (P).

14. An optical scanning method comprising:
turning on (S11) the light-source device (11) of the optical scanning device (10) according to any one of claims 1 through 13 at the light-emission power (P) having the target value (Pt) to scan the first light-receiving element (PD1) and the second light-receiving element (PD2) of the first light detector (D1) and the second light detector (D2), respectively, of the optical scanning device (10); and
controlling (S14) the light-source device (11) to scan an effective scanning area (30a) and an area (30b) surrounding the effective scanning area (30a), based on the comparative signal output from the comparator (COMP) of the optical scanning device (10).

15. A synchronization signal acquisition method for acquiring, as a synchronization signal, a comparative signal of a comparator (COMP) having received detection signals of a first light detector (D1) and a second light detector (D2) scanned by light emitted from a light-source device (11) of an optical scanning device (10), the method comprising:
determining (S1) a function (P-T) of variations in an output time (T) with a light-emission power (P) of the light-source device (11), the output time (T) being a time period from a reference time point to a time at which the comparator outputs a comparative signal; and
setting (S2) a target value (Pt) of the light-emission power (P) of the light-source device (11), based on a level (Ps) of the light-emission power (P) at which the output time T has a minimum value, the light-emission power (P) having the target value (Pt) to be used for scanning the first light-receiving element (PD1) and the second light-receiving element (PD2).

## Patentansprüche

1. Optische Abtastvorrichtung (10), umfassend:
eine Lichtquellenvorrichtung (11) zum Emittieren von Licht zum Abtasten eines Abtastbereichs;
ein optisches Abtastsystem (11, 15), das auf einem optischen Pfad des Lichts angeordnet ist, das von der Lichtquellenvorrichtung (11) emittiert wird;
einen ersten Lichtdetektor (D1), der ein erstes lichtempfangendes Element (PD1) beinhaltet;
einen zweiten Lichtdetektor (D2), der ein zweites lichtempfangendes Element (PD2) beinhaltet,
wobei das erste lichtempfangende Element (PD1) und das zweite lichtempfangende Element (PD2) nebeneinander entlang einer Hauptabtastrichtung in dem Abtastbereich angeordnet und konfiguriert sind, um jeweils ein erstes Detektionssignal und ein zweites Detektionssignal auszugeben; und
einen Komparator (COMP), der konfiguriert ist, um das erste Detektionssignal des ersten Lichtdetektors (D1) und das zweite Detektionssignal des zweiten Lichtdetektors (D2) zu vergleichen und ein Vergleichssignal auszugeben;
**dadurch gekennzeichnet, dass** die optische Abtastvorrichtung ferner Folgendes umfasst:
ein Steuersystem (6000), das konfiguriert ist, um einen Sollwert (Pt) einer Lichtemissionsleistung (P) der Lichtquellenvorrichtung (11) basierend auf einem Wert Ps der Lichtemissionsleistung (P) einzustellen, bei dem eine Ausgabezeit (T) einen Minimalwert aufweist, wobei die Lichtemissionsleistung (P) den Sollwert (Pt) aufweist, der zum Abtasten des ersten lichtempfangenden Elements (PD1) und des zweiten lichtempfangenden Elements (PD2) verwendet werden soll, und
wobei das Steuersystem konfiguriert ist, um eine Funktion (P-T) von Variationen der Ausgabezeit (T) mit der Lichtemissionsleistung (P) zu bestimmen, wobei die Ausgabezeit (T) ein Zeitraum von einem Referenzzeitpunkt bis zu einer Zeit ist, an der der Komparator (COMP) das Vergleichssignal ausgibt.

2. Optische Abtastvorrichtung (10) nach Anspruch 1,
wobei das Steuersystem (6000) konfiguriert ist, um den Sollwert (Pt) größer als oder gleich wie den Wert Ps einzustellen.

3. Optische Abtastvorrichtung (10) nach Anspruch 1,
wobei das Steuersystem (6000) konfiguriert ist, um den Sollwert (Pt) auf einen beliebigen anderen Wert als der Wert Ps innerhalb eines Bereichs um den Wert Ps einzustellen.

4. Optische Abtastvorrichtung (10) nach Anspruch 1 oder 3,
wobei das Steuersystem (6000) konfiguriert ist, um den Sollwert (Pt) innerhalb eines Bereichs von Pu bis (2Ps - Pu) in einer Funktion (P-T) von Variationen der Ausgabezeit (T) mit der Lichtemissionsleistung (P) einzustellen,
wobei
Pu ein Wert der Lichtemissionsleistung (P) ist, bei dem ein Absolutwert eines Differenzwerts in Bezug auf die Lichtemissionsleistung (P) in der Funktion (P-T) Dmax in einem ersten Leistungsbereich ist, wo die Lichtemissionsleistung (P) weniger als Ps in der Funktion (P-T) ist, und
Dmax ein Maximalwert des Absolutwerts des Differenzwerts in Bezug auf die Lichtemissionsleistung (P) in einem zweiten Leistungsbereich ist, wo die Lichtemissionsleistung (P) größer als der Wert Ps in der Funktion (P-T) ist.

5. Optische Abtastvorrichtung (10) nach Anspruch 4,
wobei die Funktion (P-T) eine Relation Δta > Δtb erfüllt,
wobei
Δta ein Variationsbereich der Ausgabezeit (T) in Bezug auf einen Variationsbereich (AP) der Lichtemissionsleistung (P) mit dem Sollwert (Pt) ist, der kleiner als Pu eingestellt ist, und
Δtb ein weiterer Variationsbereich der Ausgabezeit (T) in Bezug auf den Variationsbereich (ΔP) der Lichtemissionsleistung (P) ist, bei dem der Sollwert (Pt) innerhalb des Bereichs von Pu bis (2Ps - Pu) eingestellt ist.

6. Optische Abtastvorrichtung (10) nach Anspruch 1,
wobei das Steuersystem (6000) konfiguriert ist, um den Sollwert (Pt) größer als oder gleich wie Pu in einer Funktion (P-T) von Variationen in der Ausgabezeit (T) mit der Lichtemissionsleistung (P) einzustellen,
wobei
Pu ein Wert der Lichtemissionsleistung (P) ist, bei dem ein Absolutwert eines Differenzwerts in Bezug auf die Lichtemissionsleistung (P) in der Funktion (P-T) Dmax in einem ersten Leistungsbereich ist, wo die Lichtemissionsleistung (P) weniger als Ps in der Funktion (P-T) ist, und
Dmax ein Maximalwert des Absolutwerts des Differenzwerts in Bezug auf die Lichtemissionsleistung (P) in einem zweiten Leistungsbereich ist, wo die Lichtemissionsleistung (P) größer als Ps in der Funktion (P-T) ist.

7. Optische Abtastvorrichtung (10) nach Anspruch 6,
wobei die Funktion (P-T) eine Relation Δtc > Δtd erfüllt,
wobei
Δtc ein Variationsbereich der Ausgabezeit (T) in Bezug auf einen Variationsbereich (ΔP) der Lichtemissionsleistung (P) mit dem Sollwert (Pt) ist, der kleiner als Pu eingestellt ist, und
Δtd ein weiterer Variationsbereich der Ausgabezeit (T) in Bezug auf den Variationsbereich (ΔP) der Lichtemissionsleistung (P) ist, bei dem der Sollwert (Pt) größer als oder gleich wie Pu eingestellt ist.

8. Optische Abtastvorrichtung (10) nach einem der Ansprüche 1 bis 7,
wobei die Ausgabezeit (T) eine Summe aus einer Schnittpunktzeit (Tc) und einer Verzögerungszeit (Td) ist,
wobei die Schnittpunktzeit (Tc) ein Zeitraum von einem Referenzzeitpunkt bis zu einer Zeit ist, an der sich die Detektionssignale des ersten Lichtdetektors (D1) und des zweiten Lichtdetektors (D2) zuerst miteinander schneiden, und
die Verzögerungszeit (Td) ein Zeitraum von der Schnittpunktzeit (Tc) bis zu einer Zeit ist, an der der Komparator (COMP) das Vergleichssignal ausgibt.

9. Optische Abtastvorrichtung (10) nach Anspruch 8,
wobei die Schnittpunktzeit (Tc) monoton fällt, während die Lichtemissionsleistung (P) von einer minimalen Leistung (Pth), an der der Komparator (COMP) das Vergleichssignal ausgibt, steigt.

10. Optische Abtastvorrichtung (10) nach Anspruch 8 oder 9,
wobei ein Absolutwert des Differenzwerts bei der Lichtemissionsleistung (P) von Ps - ε in einer Funktion (P-Tc) von Variationen der Schnittpunktzeit (Tc) bei der Lichtemissionsleistung (P) größer ist als ein anderer Absolutwert des Differenzwerts bei der Lichtemissionsleistung (P) von Ps + ε, wobei ε eine positive Zahl ist.

11. Optische Abtastvorrichtung (10) nach einem der Ansprüche 8 bis 10,
wobei sich die Verzögerungszeit (Td) ändert, um einen Minimalwert bei einem anderen vorbestimmten Wert Pr der Lichtemissionsleistung (P) zu erreichen, der kleiner als der Wert Ps ist, während die Lichtemissionsleistung (P) von der Mindestleistung, bei der der Komparator (COMP) das Vergleichssignal ausgibt, steigt.

12. Optische Abtastvorrichtung (10) nach einem der Ansprüche 8 bis 11,
wobei ein Absolutwert des Differenzwerts bei der Lichtemissionsleistung (P) von Pr - δ in einer Funktion (P-Tc) von Variationen der Verzögerungszeit (Td) bei der Lichtemissionsleistung (P) größer ist als ein anderer Absolutwert des Differenzwerts bei der Lichtemissionsleistung (P) von Pr + δ, wobei δ eine positive Zahl ist.

13. Optische Abtastvorrichtung (10) nach einem der Ansprüche 1 bis 12,
wobei ein Absolutwert des Differenzwerts bei der Lichtemissionsleistung (P) von P - ζ in einer Funktion (P-T) von Variationen der Ausgabezeit (T) bei der Lichtemissionsleistung (P) größer ist als ein anderer Absolutwert des Differenzwerts bei der Lichtemissionsleistung (P) von Ps + ζ, wobei ζ eine positive Zahl ist.

14. Optisches Abtastverfahren, umfassend:
Einschalten (S11) der Lichtquellenvorrichtung (11) der optischen Abtastvorrichtung (10) nach einem der Ansprüche 1 bis 13 bei der Lichtabgabeleistung (P) mit dem Sollwert (Pt) zum Abtasten des ersten lichtempfangenden Elements (PD1) und des zweiten lichtempfangenden Elements (PD2) des ersten Lichtdetektors (D1) bzw. des zweiten Lichtdetektors (D2) der optischen Abtastvorrichtung (10); und
Steuern (S14) der Lichtquellenvorrichtung (11) zum Abtasten eines effektiven Abtastbereichs (30a) und eines Bereichs (30b), der den effektiven Abtastbereich (30a) umgibt, basierend auf der Vergleichssignalausgabe des Komparators (COMP) der optischen Abtastvorrichtung (10).

15. Synchronisationssignalerfassungsverfahren zum Erfassen eines Vergleichssignals eines Komparators (COMP), der Detektionssignale eines ersten Lichtdetektors (D1) und eines zweiten Lichtdetektors (D2) empfangen hat, die von Licht abgetastet werden, das von einer Lichtquellenvorrichtung (11) einer optischen Abtastvorrichtung (10) emittiert wird, als Synchronisationssignal, wobei das Verfahren Folgendes umfasst:
Bestimmen (S1) einer Funktion (P-T) von Variationen einer Ausgabezeit (T) mit einer Lichtemissionsleistung (P) der Lichtquellenvorrichtung (11), wobei die Ausgabezeit (T) ein Zeitraum von einem Referenzzeitpunkt bis zu eine Zeit ist, an der der Komparator ein Vergleichssignal ausgibt; und
Einstellen (S2) eines Sollwerts (Pt) der Lichtemissionsleistung (P) der Lichtquellenvorrichtung (11) basierend auf einem Wert (Ps) der Lichtemissionsleistung (P), bei dem die Ausgabezeit T einen Minimalwert aufweist, wobei die Lichtemissionsleistung (P) den Sollwert (Pt) aufweist, der zum Abtasten des ersten lichtempfangenden Elements (PD1) und des zweiten lichtempfangenden Elements (PD2) verwendet werden soll.

## Revendications

1. Dispositif de balayage optique (10) comprenant :
un dispositif de source de lumière (11) pour émettre de la lumière afin de balayage une plage de balayage ;
un système de balayage optique (11, 15) disposé sur un trajet optique de la lumière émise depuis le dispositif de source de lumière (11) ;
un premier détecteur de lumière (D1) comprenant un premier élément récepteur de lumière (PD1) ;
un deuxième détecteur de lumière (D2) comprenant un deuxième élément récepteur de lumière (PD2) ;
le premier élément récepteur de lumière (PD1) et le deuxième élément récepteur de lumière (PD2) étant disposés côte à côte suivant une direction de balayage principale dans la plage de balayage et configurés pour délivrer en sortie respectivement un premier signal de détection et un deuxième signal de détection ; et
un comparateur (COMP) configuré pour comparer le premier signal de détection du premier détecteur de lumière (D1) et le deuxième signal de détection du deuxième détecteur de lumière (D2) et délivrer en sortie un signal comparatif ;
**caractérisé en ce que** le dispositif de balayage optique comprend en outre :
un système de commande (6000) configuré pour établir une valeur cible (Pt) d'une puissance d'émission de lumière (P) du dispositif de source de lumière (11) sur la base d'un niveau Ps de la puissance d'émission de lumière (P) à laquelle un temps de sortie (T) a une valeur minimale, la puissance d'émission de lumière (P) ayant la valeur cible (Pt) à utiliser pour le balayage du premier élément récepteur de lumière (PD1) et du deuxième élément récepteur de lumière (PD2), et
dans lequel le système de commande est configuré pour déterminer une fonction (P-T) de variations dans le temps de sortie (T) avec la puissance d'émission de lumière (P), le temps de sortie (T) étant une période temporelle d'un point temporel de référence à un temps auquel le comparateur (COMP) délivre en sortie le signal comparatif.

2. Dispositif de balayage optique (10) selon la revendication 1,
dans lequel le système de commande (6000) est configuré pour établir la valeur cible (Pt) supérieure ou égale au niveau Ps.

3. Dispositif de balayage optique (10) selon la revendication 1,
dans lequel le système de commande (6000) est configuré pour établir la valeur cible (Pt) à toute valeur autre que le niveau Ps dans une plage autour du niveau Ps.

4. Dispositif de balayage optique (10) selon la revendication 1 ou 3,
dans lequel le système de commande (6000) est configuré pour établir la valeur cible (Pt) dans une plage de Pu à (2Ps - Pu) dans une fonction (P-T) de variations dans le temps de sortie (T) avec la puissance d'émission de lumière (P),
où
Pu est un niveau de la puissance d'émission de lumière (P) à laquelle une valeur absolue d'une valeur différentielle vis-à-vis de la puissance d'émission de lumière (P) dans la fonction (P-T) est Dmax dans une première région de puissance où la puissance d'émission de lumière (P) est inférieure à Ps dans la fonction (P-T), et
Dmax est une valeur maximale de la valeur absolue de la valeur différentielle vis-à-vis de la puissance d'émission de lumière (P) dans une deuxième région où la puissance d'émission de lumière (P) est supérieure au niveau Ps dans la fonction (P-T).

5. Dispositif de balayage optique (10) selon la revendication 4,
dans lequel la fonction (P-T) satisfait une relation Δta > Δtb,
où
Δta est une plage de variation du temps de sortie (T) par rapport à une plage de variation (ΔP) de la puissance d'émission de lumière (P) ayant la valeur cible (Pt) établie à une valeur inférieure à Pu, et
Δtb est une autre plage de variation du temps de sortie (T) par rapport à la plage de variation (ΔP) de la puissance d'émission de lumière (P) ayant la valeur cible (Pt) établie dans la plage de Pu à (2Ps - Pu).

6. Dispositif de balayage optique (10) selon la revendication 1,
dans lequel le système de commande (6000) est configuré pour établir la valeur cible (Pt) supérieure ou égale à Pu dans une fonction (P-T) de variations dans le temps de sortie (T) avec la puissance d'émission de lumière (P),
où
Pu est un niveau de la puissance d'émission de lumière (P) à laquelle une valeur absolue d'une valeur différentielle vis-à-vis de la puissance d'émission de lumière (P) dans la fonction (P-T) est Dmax dans une première région de puissance où la puissance d'émission de lumière (P) est inférieure à Ps dans la fonction (P-T), et
Dmax est une valeur maximale de la valeur absolue de la valeur différentielle vis-à-vis de la puissance d'émission de lumière (P) dans une deuxième région où la puissance d'émission de lumière (P) est supérieure à Ps dans la fonction (P-T).

7. Dispositif de balayage optique (10) selon la revendication la revendication 6,
dans lequel la fonction (P-T) satisfait une relation Δtc > Δtd,
où
Δtc est une plage de variation du temps de sortie (T) par rapport à une plage de variation (ΔP) de la puissance d'émission de lumière (P) ayant la valeur cible (Pt) établie à une valeur inférieure à Pu, et
Δtd est une autre plage de variation du temps de sortie (T) par rapport à la plage de variation (ΔP) de la puissance d'émission de lumière (P) ayant la valeur cible (Pt) établie à une valeur supérieure ou égale à Pu.

8. Dispositif de balayage optique (10) selon l'une quelconque des revendications 1 à 7,
dans lequel le temps de sortie (T) est une somme d'un temps d'intersection (Tc) et d'un temps de retard (Td),
dans lequel le temps d'intersection (Tc) est une période temporelle d'un point temporel de référence à un temps auquel les signaux de détection du premier détecteur de lumière (D1) et du deuxième détecteur de lumière (D2) se croisent, et
le temps de retard (Td) est une période temporelle du temps d'intersection (Tc) à un temps auquel le comparateur (COMP) délivre en sortie le signal comparatif.

9. Dispositif de balayage optique (10) selon la revendication 8,
dans lequel le temps d'intersection (Tc) diminue de façon monotone à mesure que la puissance d'émission de lumière (P) augmente à partir d'une puissance minimale (Pth) à laquelle le comparateur (COMP) délivre en sortie le signal comparatif.

10. Dispositif de balayage optique (10) selon la revendication 8 ou 9,
dans lequel une valeur absolue de la valeur différentielle à la puissance d'émission de lumière (P) de Ps - ε est supérieure à une autre valeur absolue de la valeur différentielle à la puissance d'émission de lumière (P) de Ps + ε où ε est un nombre positif, dans une fonction (P-Tc) de variations dans le temps d'intersection (Tc) avec la puissance d'émission de lumière (P).

11. Dispositif de balayage optique (10) selon l'une quelconque des revendications 8 à 10,
dans lequel le temps de retard (Td) change pour atteindre une valeur minimale à un autre niveau prédéterminé Pr de la puissance d'émission de lumière (P), qui est inférieure au niveau Ps, à mesure que la puissance d'émission de lumière (P) augmente à partir de la puissance minimale à laquelle le comparateur (COMP) délivre en sortie le signal comparatif.

12. Dispositif de balayage optique (10) selon l'une quelconque des revendications 8 à 11,
dans lequel une valeur absolue de la valeur différentielle à la puissance d'émission de lumière (P) de Pr - δ est supérieure à une autre valeur absolue de la valeur différentielle à la puissance d'émission de lumière (P) de Pr + δ où δ est un nombre positif, dans une fonction (P-Tc) de variations dans le temps de retard (Td) avec la puissance d'émission de lumière (P).

13. Dispositif de balayage optique (10) selon l'une quelconque des revendications 1 à 12,
dans lequel une valeur absolue de la valeur différentielle à la puissance d'émission de lumière (P) de Ps - ξ est supérieure à une autre valeur absolue de la valeur différentielle à la puissance d'émission de lumière (P) de Ps + ξ où ξ est un nombre positif, dans une fonction (P-T) de variations dans le temps de sortie (T) avec la puissance d'émission de lumière (P).

14. Procédé de balayage optique comprenant :
la mise en marche (S11) du dispositif de source de lumière (11) du dispositif de balayage optique (10) selon l'une quelconque des revendications 1 à 13 à la puissance d'émission de lumière (P) ayant la valeur cible (Pt) pour balayer le premier élément récepteur de lumière (PD1) et le deuxième élément récepteur de lumière (PD2) du premier détecteur de lumière (D1) et du deuxième détecteur de lumière (D2), respectivement, du dispositif de balayage optique (10) ; et
la commande (S14) du dispositif de source de lumière (11) pour balayer une zone de balayage effectif (30a) et une zone (30b) entourant la zone de balayage effectif (30a), sur la base du signal comparatif délivré en sortie par le comparateur (COMP) du dispositif de balayage optique (10).

15. Procédé d'acquisition de signal de synchronisation destiné à acquérir, en tant que signal de synchronisation, un signal comparatif d'un comparateur (COMP) ayant reçu des signaux de détection d'un premier détecteur de lumière (D1) et d'un deuxième détecteur de lumière (D2) balayés par une lumière émise depuis un dispositif de source de lumière (11) d'un dispositif de balayage optique (10), le procédé comprenant :
la détermination (S1) d'une fonction (P-T) de variations dans un temps de sortie (T) avec une puissance d'émission de lumière (P), le temps de sortie (T) étant une période temporelle d'un point temporel de référence à un temps auquel le comparateur (COMP) délivre en sortie le signal comparatif ; et
l'établissement (S2) d'une valeur cible (Pt) de la puissance d'émission de lumière (P) du dispositif de source de lumière (11), sur la base d'un niveau (Ps) de la puissance d'émission de lumière (P) à laquelle le temps de sortie T a une valeur minimale, la puissance d'émission de lumière (P) ayant la valeur cible (Pt) à utiliser pour le balayage du premier élément récepteur de lumière (PD1) et du deuxième élément récepteur de lumière (PD2).
